# EUROPEAN PATENT APPLICATION

(11) **EP 4 510 346 A1**
(43) Date of publication of application: **19.02.2025**
(21) Application number: 22944628.1
(22) Date of filing: 25.11.2022
(51) Int. Cl.: H01M 50/342, H01M 50/15

(54) **HOUSING COMPONENT, BATTERY CELL, BATTERY, AND ELECTRICAL DEVICE**

(30) Priority: 02.06.2022 WO PCT/CN2022/096957; 17.11.2022 WO PCT/CN2022/132664
(71) Applicant: Contemporary Amperex Technology Co., Limited, Fujian 352100 (CN)
(72) Inventor: GU, Mingguang, Ningde City, Fujian 352100 (CN); CHEN, Xiaobo, Ningde City, Fujian 352100 (CN)
(74) Representative: Jacob, Reuben Ellis
(86) International application number: PCT/CN2022/134419
(87) International publication number: WO 2023/231327

(57) **Abstract**

Embodiments of the present application relate to the technical field of batteries, and provide a housing component, a battery cell, a battery, and an electrical device. The housing component comprises a non-weak region and a weak region which are integrally formed, a groove portion is formed in the housing component in a punching manner, the non-weak region is formed around the groove portion, the weak region is formed at the bottom of the groove portion, and the weak region is configured to be damaged when the battery cell releases internal pressure. The minimum thickness of the weak region is A, the minimum thickness of the non-weak region is B, and 0.05≤ A/B≤ 0.95. Therefore, the purpose of refining grains in the weak region can be achieved, the material mechanical property of the weak region is improved, the toughness and fatigue resistance of the weak region are improved, the risk that the weak region is damaged during normal use of the battery cell is reduced, the service life of the battery cell is prolonged, and the risk that the battery cell explodes during thermal runaway is reduced.

## Description

### Cross-Reference to Related Applications

The present disclosure claims priority to International Patent Application PCT/CN2022/096957, filed on June 2, 2022, entitled "Pressure Relief Device, Shell, Battery Cell, Battery and Electrical Equipment", and priority to International Patent Application PCT/CN2022/132664, filed on November 17, 2022, entitled "Shell Component, Battery Cell, Battery and Electrical Equipment", which are incorporated herein by reference in its entirety.

### Technical Field

The present disclosure relates to the field of battery technology, and in particular to a housing component, a battery cell, a battery, and an electrical device.

### Background Art

With the development of new energy technology, batteries are more and more widely used, such as mobile phones, laptops, battery cars, electric vehicles, electric aircraft, electric boats, electric toy cars, electric toy boats, electric toy planes and electric tools.

In the development of battery technology, in addition to improving the safety of battery cells, the service life of battery cells is also an issue that needs to be considered. Therefore, how to improve the service life of battery cells is an urgent problem to be solved in battery technology.

### Summary

The embodiments of the present disclosure provide a shell component, a battery cell, a battery, and an electrical equipment, which can effectively improve the service life of the battery.

In the first aspect, the embodiment of the present disclosure provides a shell component for a battery cell, comprising a non-weak area and a weak area that are integrally formed, wherein the shell component is provided with a groove part by press forming, the non-weak area is formed around the groove part, the weak area is formed at the bottom of the groove part, and the weak area is configured to be damaged when the internal pressure of the battery cell is released, wherein the minimum thickness of the weak area is A, and the minimum thickness of the non-weak area is B, satisfying 0.05 ≤ A/B ≤ 0.95.

In the above technical solution, the groove part is formed in the direction of press forming on the shell component, and A/B is controlled between 0.05 and 0.95, which can achieve the goal of refining the grain of the weak area, thereby improving the material mechanical properties of the weak area, enhancing the toughness and fatigue strength of the weak area, reducing the risk of damage to the weak area during normal use of the battery cell, improving the service life of the battery cell, and reducing the risk of explosion of battery cells in the event of thermal runaway.

In some embodiments, 0.12 ≤ A/B ≤ 0.8. In this way, the overall performance of external components is improved, ensuring that the weak areas can be timely destroyed in the event of thermal runaway of the battery cell, and that the weak areas have sufficient strength during the normal use of the battery cell.

In some embodiments, 0.2 ≤ A/B ≤ 0.5. This further reduces the risk of weak areas being damaged under normal usage conditions of battery cells, and ensures that weak areas are promptly damaged in case of thermal runaway of battery cells, thereby improving the timeliness of pressure relief.

In some embodiments, 0.02mm ≤ A ≤ 1.6mm. If A is too small, it is difficult to form weak areas, and during the forming process, it is easy to cause damage to weak areas. If A is too large, the difficulty of damaging the weak area in the event of thermal runaway of the battery cell increases, which can lead to untimely pressure relief. Therefore, 0.02mm ≤ A ≤ 1.6mm, while reducing the difficulty of forming the pressure relief area, the timely pressure relief of battery cells during thermal runaway is ensured.

In some embodiments, 0.06mm ≤ A ≤ 0.4mm. This further reduces the difficulty of forming the pressure relief area, and ensures the timely pressure relief of battery cells during thermal runaway.

In some embodiments, 1mm ≤ B ≤ 5mm. If B is too large, the thickness of the non-weak area is relatively large, the material used for the shell component is more, and the weight of the shell component is larger, which has poor economic effectiveness. If B is too small, the thickness of the non-weak area is small, and the deformation resistance of the shell component is poor. Therefore, 1mm ≤ B ≤ 5mm makes the shell component more economical and have better resistance to deformation.

In some embodiments, 1.2mm ≤ B ≤ 3.5mm. This makes the shell component more economical and have better resistance to deformation.

In some embodiments, 2mm ≤ B ≤ 3mm.

In some embodiments, the average grain size of the weak area is S₁, and the average grain size of the non-weak area is S₂, satisfying S₁/S₂ ≤ 0.9. The average grain size of the weak area differs significantly from that of the non-weak area. Reducing the average grain size of the weak area improves the material mechanical properties of the weak area, and further enhances the toughness and fatigue strength of the weak area.

In some embodiments, S₁/S₂≥ 0.05. If S₁/S₂ is too small, it is more difficult to form weak areas, the strength of the weak area is too large, and the difficulty of damaging the weak area in the event of thermal runaway of the battery cell increases, which can lead to untimely pressure relief. Therefore, S₁/S₂≥ 0.05, while reducing the difficulty of forming the weak area, the timely pressure relief of battery cells during thermal runaway is ensured.

In some embodiments, 0.1 ≤ S₁/S₂ ≤ 0.5. The overall performance of shell component is improved, ensuring that the weak areas can be timely destroyed in the event of thermal runaway of the battery cell, and that the weak areas have sufficient strength during the normal use of the battery cell.

In some embodiments, 0.4µm ≤ S₁ ≤ 75µm. If S₁ is too large, weak areas have poor toughness and fatigue strength; and if S₁ is too small, it is difficult to form the weak area, and the strength of the weak area is too large. The difficulty of damaging the weak area in the event of thermal runaway of the battery cell increases, which can lead to untimely pressure relief. Therefore, 0.4µm ≤ S₁ ≤ 75µm, on the one hand, it reduces the difficulty of forming weak areas and ensures the timely pressure relief of battery cells in the event of thermal runaway; and on the other hand, it improves the toughness and fatigue resistance of the weak area, thereby reducing the risk of damage to the weak area under normal usage conditions of the battery cell.

In some embodiments, 1µm ≤ S₁ ≤ 10µm. The overall performance of shell component is improved, ensuring that the weak areas can be timely destroyed in the event of thermal runaway of the battery cell, and that the weak areas have sufficient strength during the normal use conditions of the battery cell.

In some embodiments, 10µm ≤ S₂ ≤ 150µm.

In some embodiments, 30µm ≤ S₂ ≤ 100µm.

In some embodiments, the average grain size of the weak area is S₁, satisfying 1≤A/S₁≤100. If A/S₁ is too small, in the thickness direction of the weak area, the number of grain layers in the weak area is less, and the fatigue strength of the weak area is too small; and if A/S₁ is too large, in the thickness direction of the weak area, there are too many grain layers in the weak area, and the strength of the weak area is too large, which is prone to the risk of the weak area not being damaged in time when the battery cell undergoes thermal runaway. Therefore, 1 ≤ A/S₁ ≤ 100, on the one hand, increases the number of grain layers in the thickness direction of the weak area, improves the fatigue strength of the weak area, and reduces the risk of damage to the weak area under normal usage conditions of the battery cell; and on the other hand, enables the weak areas to be more timely destroyed in the event of thermal runaway of battery cells, in order to achieve the goal of timely pressure relief.

In some embodiments, 5 ≤ A/S₁ ≤ 20. The overall performance of shell component is improved, ensuring that the weak areas can be timely destroyed in the event of thermal runaway of the battery cell, and that the weak areas have sufficient fatigue resistance during the normal use conditions of the battery cell, so as to improve the service life of the battery cell.

In some embodiments, the hardness of the weak area is H₁, satisfying 5HBW/mm≤H₁/A≤10000 HBW/mm. Not only considering the influence of the thickness of the weak area on the performance of the shell component, but also considering the influence of the hardness of the weak area on the performance of the shell component, 5HBW/mm ≤ H₁/A ≤ 10000 HBW/mm can make the weak area have sufficient strength under normal use conditions of the battery cell, and the weak area not easily damaged by fatigue, thereby improving the service life of the battery cell; and can also enable the shell component to release pressure in a timely manner through weak areas when the battery cell loses thermal control, thereby reducing the explosion risk of battery cell and improving the safety of the battery cell.

In some embodiments, 190HBW/mm≤H₁/A≤4000 HBW/mm. The overall performance of shell component is improved, ensuring that the weak areas can be timely destroyed in the event of thermal runaway of the battery cell, and that the weak areas have sufficient strength during the normal use conditions of the battery cell. On the premise of ensuring the safety of battery cells, the service life of battery cells is improved.

In some embodiments, the hardness of the weak area is H₁, and the hardness of the non-weak area is H₂, satisfying H₁>H₂. In this way, it is equivalent to increasing the hardness of the weak area, thereby enhancing its strength and reducing the risk of damage to the weak area under normal usage conditions of the battery cell.

In some embodiments, H₁/H₂≤ 5. If H₁/H₂ is too large, it may be difficult to damage the weak area during the thermal runaway of the battery cell. Therefore, H₁/H₂ ≤ 5 reduces the risk of weak areas being unable to be damaged in a timely manner during thermal runaway of battery cells, and improves the safety of battery cells.

In some embodiments, H₁/H₂≤ 2.5. This further reduces the risk of weak areas being unable to be damaged in a timely manner during thermal runaway of battery cells.

In some embodiments, 5HBW ≤ H₂ ≤ 150HBW.

In some embodiments, 5HBW ≤ H₁ ≤ 200HBW.

In some embodiments, the shell component has a pressure relief area, wherein the groove part includes a first stage notching groove, the notching groove is set along the edge of the pressure relief area, the pressure relief area is configured to open with the notching groove as the boundary, and the weak area forms the bottom of the notching groove. When the weak area is damaged, the pressure relief area can be opened with the weak area as the boundary to achieve pressure relief, increasing the pressure relief area of the shell component.

In some embodiments, the shell component has relatively set first and second surfaces, and the notching groove is recessed from the first surface towards the direction close to the second surface. The notching groove is the groove part and thus is of a simple structure. During molding, the notching groove can be formed on the first surface for easy molding, improving production efficiency and reducing production costs.

In some embodiments, the shell component comprises a first surface and a second surface that are relatively arranged, and the groove part comprises multi-stage notching grooves, wherein the multi-stage notching grooves are sequentially arranged along the direction from the first surface to the second surface on the shell component, and the weak area is formed at the bottom of the first stage notching groove farthest from the first surface; and the shell component has a pressure relief area, wherein each level of notching groove is set along the edge of the pressure relief area, and the pressure relief area is configured to open with the first stage notching groove farthest from the first surface as the boundary. During molding, multi-stage notching grooves can be formed on the shell component stage by stage, which can reduce the molding depth of each level of notching groove, thereby reducing the molding force on the shell component when forming each level of notching groove, and reducing the risk of cracking on the shell component. The shell component is less likely to fail due to generating cracking at the location of the notching groove, thereby improving the service life of the shell component.

In some embodiments, the first stage notching groove furthest from the second surface is concave from the first surface towards the direction close to the second surface. The groove part is composed of multi-stage notching grooves, which can be gradually processed from the first surface to the second surface during molding.

In some embodiments, the shell component includes a first surface and a second surface that are relatively arranged, and the groove part also includes a first stage sink groove, wherein the sink groove is recessed from the first surface towards the direction close to the second surface, and the pressure relief area is formed on the bottom wall of the sink groove. The setting of the sink groove can reduce the depth of the notching groove while ensuring a certain thickness of the final weak area, thereby reducing the forming force on the shell component during the formation of the notching groove and reducing the risk of generating cracking on the shell component. In addition, the sink groove can provide avoidance space for the pressure relief area during the opening process. Even if the first surface is obstructed by obstacles, the pressure relief area can still be opened to release the pressure.

In some embodiments, the shell component includes a first surface and a second surface that are relatively arranged, and the groove part also includes multi-stage sink grooves, wherein the multi-stage sink grooves are sequentially arranged along the direction from the first surface to the second surface on the shell component; the first stage sink groove farthest from the second surface is concave from the first surface towards the second surface; and the pressure relief area is formed on the bottom wall of the first stage sink groove farthest from the first surface. When forming multi-stage sink grooves, the forming depth of each stage of sink groove can be reduced, which can reduce the forming force on the shell component during the forming of each stage of sink groove, and reduce the risk of generating cracking on the shell components. In addition, the multi-stage sink grooves can provide avoidance space for the pressure relief area during the opening process. Even if the first surface is obstructed by obstacles, the pressure relief area can still be opened to release the pressure.

In some embodiments, the internal space of the sink groove is of a cylinder, prismoid, circular truncated cone, or frustum. The sink groove of this structure is simple, and easy to form, and can provide more avoidance space for the pressure relief area during the opening process.

In some embodiments, the notching groove includes a first groove segment and a second groove segment, wherein the first groove segment intersects with the second groove segment, and the first groove segment and the second groove segment are set along the edge of the pressure relief area. The stress at the intersection position of the first and second groove segments is more concentrated, allowing the weak area to be the first to be damaged at the intersection position of the first and second groove segments. When the detonation pressure of the battery cell is constant, the weak area can be made thicker to reduce the forming depth of the notching groove.

In some embodiments, the notching groove further includes a third groove segment, wherein the first groove segment and the third groove segment are set opposite to each other, the second groove segment and the third groove segment intersect, and the first groove segment, the second groove segment, and the third groove segment are set along the edge of the pressure relief area. In this way, the pressure relief area can be opened with the first, second, and third groove segments as boundaries. When the battery cell releases pressure, the pressure relief area is easier to open, achieving large-scale pressure relief of the shell component.

In some embodiments, the first groove segment, the second groove segment, and the third groove segment are sequentially connected, with the first groove segment, the second groove segment, and the third groove segment defining a pressure relief area.

In some embodiments, the first groove segment, the second groove segment, and the third groove segment define two pressure relief areas, which are located on both sides of the second groove segment. Two pressure relief areas can be opened to release the pressure in opposite directions to effectively improve the pressure relief efficiency of the shell component.

In some embodiments, the notching groove is a groove that extends along a non-closed trajectory. The pressure relief area can be opened in a flipped manner, and after opening, the pressure relief area will eventually connect to other areas of the shell component, thereby reducing the risk of splashing after opening the pressure relief area.

In some embodiments, the notching groove is a arc-shaped groove. The arc-shaped groove is simple in structure and easy to form. During the pressure relief process, the pressure relief area can quickly rupture along the arc-shaped groove, allowing the pressure relief area to open quickly.

In some embodiments, the notching groove is a groove that extends along a closed trajectory. During the pressure relief process, the shell component can rupture along the notching groove, allowing the pressure relief area to open in a detached manner, increasing the pressure relief area of the shell component and improving the pressure relief rate of the shell component.

In some embodiments, the notching groove is an annular groove. The annular groove has a simple structure and is easy to form. During the pressure relief process, the shell component can quickly rupture along the annular groove to quickly open the pressure relief area.

In some embodiments, the area of the pressure relief area is D, which satisfies: 90mm²≤D≤1500mm². If D is too small, the pressure relief area of the shell component is small, resulting in poor timely pressure relief when the battery cell loses thermal control; and if D is too large, the impact resistance of the pressure relief area is poor, and the deformation of the pressure relief area increases after being subjected to force. The weak area is easily damaged under normal usage conditions of the battery cell, which affects the service life of the battery cell. Therefore, 90mm²≤D≤1500mm² can not only improve the service life of battery cells, but also enhance their safety.

In some embodiments, 150mm²≤D≤1200mm².

In some embodiments, 200mm²≤D≤1000mm².

In some embodiments, 250mm²≤D≤800mm².

In some embodiments, the shell component has a first surface and a second surface oppositely arranged, the groove part is concave from the first surface towards the direction close to the second surface, the groove part forms an outer edge on the first surface, and the area beyond the preset distance from the outer edge of the shell component is the non-weak area. In this way, the non-weak area is less susceptible to the influence of the forming process in the groove part, making the grains in the non-weak area more uniform.

In some embodiments, the preset distance is L, satisfying: L=5mm.

In some embodiments, the shell component also includes a transition area, which connects the weak area and the non-weak area, wherein the average grain size of the transition area is S₃, satisfying S₃≤S₂. The transition area plays a role in connecting weak and non-weak areas, achieving the integral forming of weak and non-weak areas.

In some embodiments, the shell component is an end cover, which is used to close the opening of the casing, and the casing is used to accommodate the electrode assembly. This enables the end cover to have a pressure relief function, ensuring the safety of the battery cell.

In some embodiments, the shell component is a casing, the casing has an opening, and the casing is used to accommodate the electrode assembly. This enables the casing to have a pressure relief function, ensuring the safety of the battery cell.

In some embodiments, the casing comprises multiple integrally formed wall portions, which collectively define the internal space of the casing, and at least one wall portion is provided with a groove part. Multiple wall portions are formed integrally, making the wall portions with groove part more reliable.

In some embodiments, multiple wall portions include a bottom wall and multiple side walls surrounding the bottom wall, and the casing forms an opening at one end opposite to the bottom wall; and the bottom wall is provided with a groove part; and/or, at least one side wall is provided with a groove part.

In some embodiments, the casing is in cuboid. This is suitable for square battery cells and able to meet the high capacity requirements of battery cells.

In some embodiments, the material of the shell component includes aluminum alloy. The shell component of aluminum alloy is lightweight, has good ductility, and is easy to shape.

In some embodiments, the aluminum alloy includes components with a mass percentage content of aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other individual elements ≤ 0.03%. This kind of aluminum alloy has lower hardness, and better forming ability, which reduces the difficulty of forming the groove part, improves the forming accuracy of the groove part, and improves the pressure relief consistency of the shell component.

In some embodiments, the aluminum alloy includes components with a mass percentage content of aluminum ≥ 96.7%, 0.05% ≤ copper ≤ 0.2%, iron ≤ 0.7%, manganese ≤ 1.5%, silicon ≤ 0.6%, zinc ≤ 0.1%, other individual element components ≤ 0.05%, and total other element components ≤ 0.15%. The shell component made of this aluminum alloy has higher hardness, greater strength, and good resistance to damage.

In the second aspect, an embodiment of the present disclosure relates to a battery cell, comprising a shell component provided in any one embodiment of the first aspect.

In some embodiments, the battery cell further comprises a casing with an opening for accommodating the electrode assembly; and the shell component is an end cover, which closes the opening.

In some embodiments, the shell component is the casing, the casing has an opening, and the casing is used to accommodate the electrode assembly; and the battery cell also includes an end cover and the end cover closes the opening.

In the third aspect, the embodiment of the present disclosure provides an battery, including the battery cell provided by any one of the embodiments of the second aspect.

In some embodiments, the weak area is located at the lower part of the battery cell. During the use of the battery, under the gravity of the electrode assembly, electrolyte, etc. inside the battery cell, the weak area will be subjected to a significant force. Due to the integrated structure of the weak area and the non-weak area, it has good structural strength, and better reliability, and improves the service life of the battery cell.

In some embodiments, the battery cell comprises a casing for accommodating electrode assembly, wherein the casing comprises a bottom wall and multiple side walls surrounding the bottom wall, the bottom wall and the side walls are integrally formed, and the casing forms an opening at one end opposite to the bottom wall, with the weak area located on the bottom wall.

In some embodiments, the battery cell includes an end cover, which is used to close the opening of the casing, wherein the casing is used to accommodate the electrode assembly, and the weak area is located on the end cover.

In the fourth aspect, the embodiment of the present disclosure provides an electrical equipment, including the battery provided by any one of the embodiments of the third aspect.

### Brief Description of Drawings

In order to more clearly illustrate technical solutions of embodiments of the present disclosure, drawings required for use in the embodiments will be described briefly below. It should be understood that the following drawings are merely illustrative of some embodiments of the present disclosure, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present disclosure;
FIG. 2 is an exploded view of the battery provided in some embodiments of the present disclosure;
FIG. 3 is an exploded view of the battery cell provided in some embodiments of the present disclosure;
FIG. 4 is a structural schematic view of the shell component provided in some embodiments of the present disclosure;
FIG. 5 is a C-C sectional view of the shell component shown in FIG. 4;
FIG. 6 is a partially enlarged view of the part E of the shell component shown in FIG. 5;
FIG. 7 is a partial enlarged view of the shell component provided in some other embodiments of the present disclosure;
FIG. 8 is a grain view (schematic diagram) of the shell component shown in FIG. 5;
FIG. 9 is a structural schematic view (showing the first stage notching groove) of the shell component provided in some other embodiments of the present disclosure;
FIG. 10 is a E-E sectional view of the shell component shown in FIG. 9;
FIG. 11 is a structural schematic view (showing the first stage notching groove) of the shell component provided in some other embodiments of the present disclosure;
FIG. 12 is a F-F sectional view of the shell component shown in FIG. 11;
FIG. 13 is a structural schematic view (showing the first stage notching groove) of the shell component provided in some other embodiments of the present disclosure;
FIG. 14 is a G-G sectional view of the shell component shown in FIG. 13;
FIG. 15 is a structural schematic view (showing two levels of notching grooves) of the shell component provided in some other embodiments of the present disclosure;
FIG. 16 is a K-K sectional view of the shell component shown in FIG. 15;
FIG. 17 is a structural schematic view (showing two levels of notching grooves) of the shell component provided in some other embodiments of the present disclosure;
FIG. 18 is a M-M sectional view of the shell component shown in FIG. 17;
FIG. 19 is a structural schematic view (showing two levels of notching grooves) of the shell component provided in some other embodiments of the present disclosure;
FIG. 20 is a N-N sectional view of the shell component shown in FIG. 19;
FIG. 21 is an axonometric drawing of the shell component provided in some embodiments of the present disclosure;
FIG. 22 is a structural schematic view (showing the first stage notching groove and the first stage sink groove) of the shell component shown in FIG. 21;
FIG. 23 is a O-O sectional view of the shell component shown in FIG. 22;
FIG. 24 is a structural schematic view (showing the first stage notching groove and the first stage sink groove) of the shell component provided in some other embodiments of the present disclosure;
FIG. 25 is a P-P sectional view of the shell component shown in FIG. 24;
FIG. 26 is a structural schematic view (showing the first stage notching groove and the first stage sink groove) of the shell component provided in some other embodiments of the present disclosure;
FIG. 27 is a Q-Q sectional view of the shell component shown in FIG. 26;
FIG. 28 is a structural schematic view (showing the first stage notching groove and two levels of sink grooves) of the shell component provided in some embodiments of the present disclosure;
FIG. 29 is a R-R sectional view of the shell component shown in FIG. 28;
FIG. 30 is a structural schematic view (showing the first stage notching groove and two levels of sink grooves) of the shell component provided in some other embodiments of the present disclosure;
FIG. 31 is a S-S sectional view of the shell component shown in FIG. 30;
FIG. 32 is a structural schematic view (showing the first stage notching groove and two levels of sink grooves) of the shell component provided in some other embodiments of the present disclosure;
FIG. 33 is a T-T sectional view of the shell component shown in FIG. 32;
FIG. 34 is a structural schematic view (showing the first stage notching groove in V shape) of the shell component provided in some embodiments of the present disclosure;
FIG. 35 is a structural schematic view of the shell component provided in some other embodiments of the present disclosure;
FIG. 36 is a grain view (schematic diagram) of the shell component provided in some other embodiments of the present disclosure;
FIG. 37 is a schematic view of the structure of the end cover provided in some embodiments of the present disclosure;
FIG. 38 is a structural schematic view of the casing provided in some embodiments of the present disclosure;
FIG. 39 is a schematic view of a structure of the casing provided in some other embodiments of the present disclosure; and
FIG. 40 is a schematic view of a structure of the battery cell provided in some embodiments of the present disclosure.

Reference signs: 1-shell; 11-end cover; 12-casing; 121-wall portion; 121aside wall; 121b-bottom wall; 2-electrode assembly; 21-positive electrode tab; 22-negative electrode tab; 3-positive electrode terminal; 4-negative electrode terminal; 5-shell component; 51-non-weak area; 511-inner edge; 52-weak area; 53-groove part; 531-bottom surface of the groove part; 532-notching groove; 532a-the outermost first stage notching groove; 532b-the innermost first stage notching groove; 5321-first groove segment; 5322-second groove segment; 5323-third groove segment; 533-sink groove; 533a-the outermost first stage sink groove; 533b-the innermost first stage sink groove; 5331-bottom wall of sink groove; 534-outer edge; 54-first surface; 55-second surface; 56-pressure relief area; 57-transition area; 10-battery cell; 20-box; 201-first part; 202-second part; 100-battery; 200-controller; 300-motor; 1000-vehicle; Y-middle plane.

### Detailed Description of Embodiments

In order to make the objectives, technical solutions and advantages of the embodiments of the present disclosure clearer, the technical solutions in the embodiments of the present disclosure will be described clearly below with reference to the drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

Unless otherwise defined, all technical and scientific terms used in the present disclosure have the same meanings as those commonly understood by those skilled in the art to which the present disclosure belongs. The terms used in the description of the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions. The terms "first", "second", etc. in the description and the claims of the present disclosure or the drawings are used to distinguish different objects, rather than describing specific sequences or primary and secondary relationships.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment.

The term "and/or" in the present disclosure is only a description for the association relationship of the associated object, indicating that there can be three types of relationships. For example, A and/or B can indicate three conditions: the presence of only A, the presence of both A and B, and the presence of only B. In addition, the character "/" in the present disclosure generally indicates that the associated objects before and after have an "or" relationship.

In the embodiments of the present disclosure, the same reference signs represent the same components, and for simplicity, detailed descriptions for the same components are omitted in different embodiments. It should be understood that the thickness, length, width, and other dimensions of various components in the embodiments of the present disclosure shown in the drawings, as well as the overall thickness, length, width, and other dimensions of the integrated device, are only illustrative examples and should not constitute any limitations to the present disclosure.

The term "multiple (a plurality of)" in the present disclosure refers to two or more (including two).

In the embodiments of the present disclosure, the battery cell can be a secondary battery, which refers to a battery cell with the active material that can be activated and continue to be used by charging after the discharge of the battery cell.

The battery cells can be lithium ion batteries, sodium ion batteries, sodium lithium ion batteries, lithium metal batteries, sodium metal batteries, lithium sulfur batteries, magnesium ion batteries, nickel hydrogen batteries, nickel cadmium batteries, lead accumulator, etc., and this is not limited by the embodiments of the present disclosure.

The battery mentioned in the embodiments of the present disclosure can include a single physical module that includes one or more battery cells to provide higher voltage and capacity. When there are multiple battery cells, multiple battery cells are connected in series, parallel, or hybrid through a busbar component.

In some embodiments, the battery can be a battery module, and when there are multiple battery cells, multiple battery cells are arranged and fixed to form one battery module.

In some embodiments, the battery can be a battery pack, which includes a box and a battery cell, and the battery cell or battery module is accommodated in the box.

In some embodiments, the box can serve as a part of the chassis structure of the vehicle. For example, the part of the box can become at least a part of the floor of the vehicle, or the part of the box can become at least a part of the crossbeam and longitudinal beam of the vehicle.

In some embodiments, the battery may serve as an energy storage device. Energy storage devices include energy storage containers, energy storage electrical cabinets, etc.

The development of battery technology needs to consider multiple design factors simultaneously, such as energy density, cycle life, discharge capacity, charging and discharging rate, and other performance parameters. In addition, it is also necessary to consider the safety of the battery.

In the battery cell, in order to ensure the safety of the battery cell, a pressure relief mechanism can be installed on the shell of the battery cell. In case of thermal runaway of the battery cell, the pressure inside the battery cell can be released through the pressure relief mechanism to improve the safety of the battery cell.

For typical battery cells, the pressure relief mechanism is welded to the shell to fix it to the shell. Taking the example that the pressure relief mechanism is the explosion-proof plate set on the end cover of the shell, when the battery cell loses thermal control, the explosion-proof plate is damaged to discharge the emission inside the battery cell and achieve the purpose of releasing the pressure inside the battery cell. Due to the welding connection between the pressure relief mechanism and the shell, cracks may appear at the welding position during long-term use of the battery cell, leading to a decrease in the strength of the welding position. It is easy for the welding position to be damaged when the pressure inside the battery cell does not reach the detonation pressure of the pressure relief mechanism, resulting in the failure of the pressure relief mechanism and lower reliability of the pressure relief mechanism.

To improve the reliability of the pressure relief mechanism, inventors have found that the pressure relief mechanism can be integrated with the shell, with a portion of the shell serving as the pressure relief mechanism. For example, by weakening the local area of the end cover, the strength of the local area of the end cover can be reduced, forming a weak zone and thus forming an integrated pressure relief mechanism. This can effectively improve the reliability of the pressure relief mechanism.

The inventor noticed that after forming an integrated pressure relief mechanism on the shell, the mechanical performance of the weak area of the shell is poor. Under normal usage conditions of the battery cell, the weak area is prone to fatigue and damage due to long-term changes in internal pressure of the battery cell, which affects the service life of the battery cell.

In view of this, the embodiment of the present disclosure provides a shell component. By setting groove part on the shell component, an integrally formed non-weak area and weak area are formed. The non-weak area is formed around the groove part, and the weak area is formed at the bottom of the groove part. The minimum thickness of the weak area is A, and the minimum thickness of the non-weak area is B, meeting 0.05 ≤ A/B ≤ 0.95.

In such shell component, the groove part is formed in the direction of press forming on the shell component, and A/B is controlled between 0.05 and 0.95, which can achieve the goal of refining the grain of the weak area, thereby improving the material mechanical properties of the weak area, enhancing the toughness and fatigue strength of the weak area, reducing the risk of damage to the weak area during normal use of the battery cell, improving the service life of the battery cell, and reducing the risk of explosion of battery cells in the event of thermal runaway.

The technical solution described in the embodiments of the present disclosure is applicable to batteries and electrical equipment using batteries.

The electrical equipment can be a vehicle, a mobile phone, a portable device, a notebook computer, a ship, a spacecraft, an electric toy, an electric tool, and the like. The vehicle can be a fuel vehicle, a gas vehicle, or a new energy vehicle. The new energy vehicle can be a pure electric vehicle, a hybrid electric vehicle, a range extended vehicle, or the like. The spacecraft includes an aircraft, a rocket, a space shuttle, a spacecraft, and the like. The electric toys include a stationary or mobile electric toy, such as a game console, an electric vehicle toy, an electric ship toy, an electric airplane toy, and the like. The electric tools include a metal cutting electric tool, a grinding electric tool, an assembly electric tool, and an electric tool for railways, such as an electric drill, an electric grinder, an electric wrench, an electric screwdriver, an electric hammer, an electric impact drill, a concrete vibrator, and an electric planer. The foregoing electrical equipment is not specially limited in the embodiment of the present disclosure.

For ease of description, the following embodiments will be described by taking an electrical equipment being a vehicle as an example.

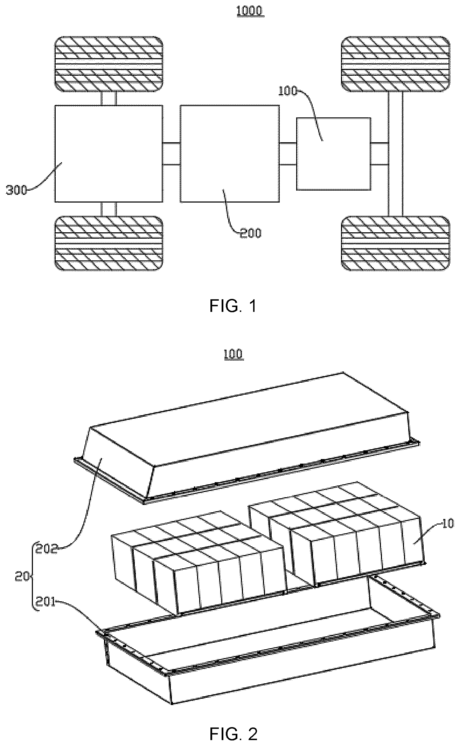

Referring to FIG. 1, FIG. 1 is a structural schematic view of the vehicle 1000 provided in some embodiments of the present disclosure. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000.

The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an explosion view of the battery 100 provided in some embodiments of the present disclosure. The battery 100 includes a battery cell 10 and a box 20, which is used to accommodate the battery cell 10.

In the above, the box 20 is a component that accommodates the battery cell 10, and the box 20 provides an accommodating space for the battery cell 10. The box 20 can be of various structures. In some embodiments, the box 20 may include a first part 201 and a second part 202, with the first part 201 and the second part 202 covering each other, so as to define an accommodating space for accommodating the battery cell 10. The first part 201 and the second part 202 can be of various shapes, such as cuboid, cylinder, etc. The first part 201 can be of a hollow structure with one side opened, and the second part 202 can also be of a hollow structure with one side opened. The opened side of the second part 202 covers the opened side of the first part 201, so as to form a box 20 with accommodating space. It can also be that the first part 201 is of a hollow structure with one side opened, the second part 202 is of a plate-like structure, and the second part 202 covers the opened side of the first part 201, so as to form a box 20 with accommodating space. As an example, the battery cell 10 can be a cylindrical battery cell, a prismatic battery cell, a soft pack battery cell, or other shaped battery cell 10. The prismatic battery cell includes a square shell battery cell, a blade-shaped battery cell, a polygon prism battery, for example, a hexagonal prismatic battery, etc. There are no special limitations in the present disclosure.

In battery 100, one or multiple battery cells 10 can be provided. If multiple battery cells 10 are provided, the multiple battery cells 10 can be connected in series, parallel, or hybrid. Hybrid connection means that both series connection and parallel connection exist among multiple battery cells 10. It is possible that multiple battery cells 10 are first connected in series, parallel, or hybrid to form a battery module, and multiple battery modules are then connected in series, parallel, or hybrid to form a whole to be accommodated in the box 20. Alternatively, all battery cells 10 can be directly connected in series, parallel, or hybrid together, and then the entire body composed of all battery cells 10 can be accommodated in the box 20.

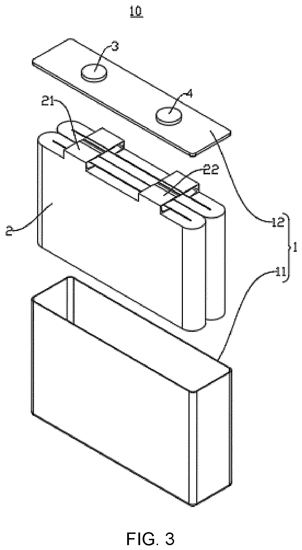

Referring to FIG. 3, FIG. 3 is an explosion view of the battery cell 10 provided in some embodiments of the present disclosure. The battery cell 10 may include a shell 1 and electrode assembly 2.

The shell 1 is used to accommodate the electrode assembly 2, electrolyte and other components. Shell 1 can be a steel shell, aluminum shell, plastic shell (such as polypropylene), composite metal shell (such as copper aluminum composite shell), or aluminum-plastic film. As an example, the shell 1 may include a casing 12 and an end cover 11.

The casing 12 can be of a hollow structure with one end forming an opening, and the casing 12 can also be of a hollow structure with two opposite ends forming openings. The material of casing 12 can be various, such as copper, iron, aluminum, steel, aluminum alloy, etc.

The end cover 11 is a component that blocks the opening of the casing 12 to isolate the internal environment of the battery cell 10 from the external environment. The end cover 11 and the casing 12 jointly define an accommodating space for accommodating the electrode assembly 2, the electrolyte, and other components. The end cover 11 can be connected to the casing 12 by welding or rolling to close the opening of the casing 12. The shape of the end cover 11 can match the shape of the shell 1. For example, the casing 12 is of a cuboid structure, and the end cover 11 is of a rectangular plate-like structure matching the shell 1. For another example, the casing 12 is of a cylinder, and the end cover 11 is of a circular plate-like structure matching the casing 12. The material of end cover 11 can also be various, such as copper, iron, aluminum, steel, aluminum alloy, etc.

In the battery cell 10, one or two end covers 11 can be provided. In the embodiment where the casing 12 is of a hollow structure with openings formed at both ends, two end covers 11 can be provided correspondingly, and the two end covers 11 each cover the two openings of the casing 12. The two end covers 11 and the casing 12 jointly define the accommodating space. In the embodiment where the casing 12 is of a hollow structure with an opening formed at one end, one end cover 11 can be provided correspondingly, and the end cover 11 covers the opening at one end of the casing 12. The one end cover 11 and the casing 12 jointly define the accommodating space.

The electrode assembly 2 includes a positive electrode, a negative electrode, and a separator. During the charging and discharging process of battery cell 10, active ions (such as lithium ions) are inserted and removed back and forth between the positive and negative electrodes. The separator is set between the positive and negative electrodes, which can prevent short circuits between the positive and negative electrodes and allow active ions to pass through.

In some embodiments, the positive electrode can be a positive electrode plate, which may include a positive electrode current collector and a positive electrode active material set on at least one surface of the positive electrode current collector.

As an example, the positive electrode current collector has two surfaces opposite in its own thickness direction, and the positive electrode active material is set on either or both surfaces opposite to each other of the positive electrode current collector.

As an example, the positive electrode current collector can be metal foil or composite current collectors. For example, as a metal foil, silver surface treated aluminum or stainless steel, stainless steel, copper, aluminum, nickel, carbon precision electrodes, carbon, nickel, or titanium can be used. The composite current collector can include a polymer material base layer and a metal layer. Composite current collector can be formed by forming metal materials (aluminum, aluminum alloys, nickel, nickel alloys, titanium, titanium alloys, silver and silver alloys, etc.) onto polymer material substrates (such as polypropylene, polyethylene terephthalate, polybutylene terephthalate, polystyrene, polyethylene, etc.).

As an example, the positive electrode active material may include at least one of the following materials: lithium-containing phosphate, lithium transition metal oxide, and their respective modified compounds. But the present disclosure is not limited to these materials, and other traditional materials that can be used as positive electrode active materials for batteries can also be used. These positive electrode active materials can be used alone or in combination with two or more. Examples of lithium-containing phosphates may include but are not limited to at least one of lithium iron phosphate (such as LiFePO₄ (also referred to as LFP), composite materials of lithium iron phosphate and carbon, lithium manganese phosphate (such as LiMnPO₄), composite materials of lithium manganese phosphate and carbon, lithium manganese iron phosphate, and composite materials of lithium manganese iron phosphate and carbon. Examples of lithium transition metal oxides may include but are not limited to at least one of lithium cobalt oxide (such as LiCoO₂), lithium nickel oxide (such as LiNiO₂), lithium manganese oxide (such as LiMnO₂, LiMn2O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), lithium nickel cobalt aluminum oxide (such as LiNi_{0.85}Co_{0.15}Al_{0.05}O₂), and their modified compounds.

In some embodiments, the positive electrode can be made of foam metal. Foam metal can be foam nickel, foam copper, foam aluminum, foam alloy, or foam carbon. When the foam metal is used as the positive electrode, the positive electrode active material may not be set on the surface of the foam metal, but it can also be set. As an example, the foam metal can also be filled or/and deposited with lithium source material, potassium metal or sodium metal, and the lithium source material is lithium metal and/or lithium rich material.

In some embodiments, the negative electrode may be a negative electrode plate, which may include a negative electrode current collector and a negative electrode active material set on at least one surface of the negative electrode current collector.

As an example, the negative electrode current collector has two surfaces opposite in its own thickness direction, and the negative electrode active material is set on either or both surfaces opposite to each other of the negative electrode current collector.

As an example, the negative electrode current collector can be metal foil or composite current collectors. For example, as a metal foil, silver surface treated aluminum or stainless steel, stainless steel, copper, aluminum, nickel, carbon precision electrodes, carbon, nickel, or titanium can be used. The composite current collector can include a polymer material base layer and a metal layer. Composite current collector can be formed by forming metal materials (copper, copper alloys, nickel, nickel alloys, titanium, titanium alloys, silver and silver alloys, etc.) onto polymer material substrates (such as polypropylene, polyethylene terephthalate, polybutylene terephthalate, polystyrene, polyethylene, etc.).

As an example, the negative electrode active material can use a negative electrode active material commonly known in the art for batteries. As an example, negative electrode active materials may include at least one of the following materials: artificial graphite, natural graphite, soft carbon, hard carbon, silicon-based materials, tin-based materials, and lithium titanate. Silicon-based materials can be selected from at least one of elemental silicon, silicon oxide compounds, silicon carbon composites, silicon nitrogen composites, and silicon alloys. Tin-based materials can be selected from at least one of elemental tin, tin oxide compounds, and tin alloys. But the present disclosure is not limited to these materials, and other traditional materials that can be used as negative electrode active materials for batteries can also be used. These negative electrode active materials can be used alone or in combination with two or more.

In some embodiments, the negative electrode can be made of foam metal. Foam metal can be foam nickel, foam copper, foam aluminum, foam alloy, or foam carbon. When the foam metal is used as the negative electrode plate, the negative electrode active material may not be set on the surface of the foam metal, but it can also be set.

As an example, the negative electrode current collector can also be filled or/and deposited with lithium source material, potassium metal or sodium metal, and the lithium source material is lithium metal and/or lithium rich material.

In some embodiments, the positive electrode current collector may be made of aluminum, and the negative electrode current collector may be made of copper.

In some embodiments, electrode assembly 2 also includes an separator, which is set between the positive and negative electrodes.

In some embodiments, the separator is an isolation membrane. There are no special restrictions on the types of isolation membranes in the present disclosure, and any well-known porous-structure isolation membrane with good chemical and mechanical stability can be selected.

As an example, the main materials of the isolation membrane can be selected from at least one of glass fiber, non-woven fabric, polyethylene, polypropylene, polyvinylidene fluoride and ceramics. The isolation membrane can be a single-layer thin film or a multi-layer composite thin film without any special restrictions. When the isolation membrane is a multi-layer composite thin film, the materials of each layer can be the same or different without special limitations. The separator can be a separate component located between the positive and negative electrodes, or it can be attached to the surface of the positive and negative electrodes.

In some embodiments, the separator is a solid electrolyte. The solid electrolyte is located between the positive and negative electrodes, serving both to transport ions and isolate the positive and negative electrodes.

In some embodiments, the battery cell 10 also includes an electrolyte, which plays a role in conducting ions between the positive and negative electrodes. The present disclosure does not have specific restrictions on the types of electrolytes and can be selected according to needs. The electrolyte can be liquid, gelled or solid.

The liquid electrolytes include electrolyte salts and solvents.

In some embodiments, the electrolyte salt may be selected from at least one of lithium hexafluorophosphate, lithium tetrafluoroborate, lithium perchlorate, lithium hexafluoroarsenate, lithium bis(fluorosulfonimide), lithium bis(trifluoromethane)sulfonimide, lithium triflate, lithium difluorophosphate, lithium difluoro(oxalato)borate, lithium bis(oxalato)borate, lithium difluoro bis(oxalato)phosphate and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and ethyl sulfonyl ethane. Ether solvents can also be used as solvents. Ether solvents can include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ethers.

The gelled electrolyte includes the framework network with polymer as the electrolyte, with ionic liquid-lithium salt.

The solid electrolytes include polymer solid electrolytes, inorganic solid electrolytes, and composite solid electrolytes.

As an example, polymer solid electrolytes can be polyether (polyethylene oxide), polysiloxane, polycarbonate, polyacrylonitrile, polyvinylidene fluoride, polymethyl methacrylate, monoionic polymers, polyionic liquid-lithium salt, cellulose, etc.

As an example, inorganic solid electrolytes can be one or more of oxide solid electrolytes (crystalline perovskite, sodium superconducting ion conductor, garnet, amorphous LiPON film), sulfide solid electrolytes (crystalline lithium superionic conductor (lithium germanium phosphorus sulfur, sulfur silver germanite), amorphous sulfides), as well as halide solid electrolytes, nitride solid electrolytes, and hydride solid electrolytes.

As an example, composite solid electrolytes are formed by adding inorganic solid electrolyte fillers to polymer solid electrolytes.

In some embodiments, electrode assembly 2 is of a wound structure. The positive and negative electrode plates are wound into a winding structure.

In some embodiments, electrode assembly 2 is of a stacked structure.

As an example, multiple positive and negative electrode plates can be set separately, and multiple positive and negative electrode plates can be alternately stacked.

As an example, multiple positive electrode plates can be arranged, and the negative electrode plate can be folded to form multiple stacked folding sections. One positive electrode plate can be clamped between adjacent folding sections.

As an example, both the positive and negative electrode plates are folded to form multiple stacked folding sections.

As an example, multiple separators can be set between any adjacent positive or negative electrode plates.

As an example, the separator can be continuously set between any adjacent positive or negative electrode plates by folding or winding.

In some embodiments, the shape of electrode assembly 2 may be cylindrical, flat, or in a shape of polygon prism.

In some embodiments, electrode assembly 2 is equipped with an tab, which can lead current out from electrode assembly 2. The tab includes the positive tab 21 and the negative tab 22.

The battery cell 10 can also include electrode terminals, which can be set on the shell 1. The electrode terminals are used for electrical connection with the tab of the electrode assembly 2 to output the electrical energy of the battery cell 10. The electrode terminal can be directly connected to the tab, for example, the electrode terminal can be directly welded to the tab. The electrode terminal and the tab can also be indirectly connected, for example, the electrode terminal and the tab are indirectly connected through a current collector component. The current collector component can be metal conductor, such as copper, iron, aluminum, steel, aluminum alloy, etc.

As shown in FIG. 3, taking the casing 12 being in a hollow structure with one end forming an opening as an example, two electrode terminals can be set on the end cover 11. The two electrode terminals are positive electrode terminal 3 and negative electrode terminal 4, respectively. The positive electrode terminal 3 is electrically connected to the positive tab 21, and the negative electrode terminal 4 is electrically connected to the negative tab 22.

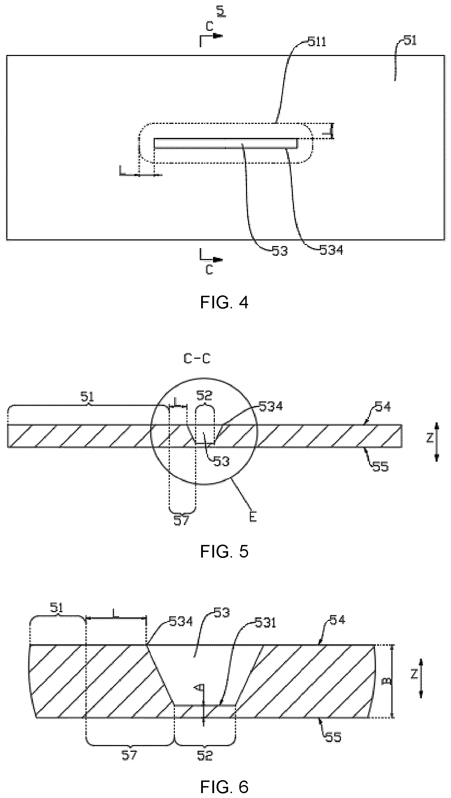

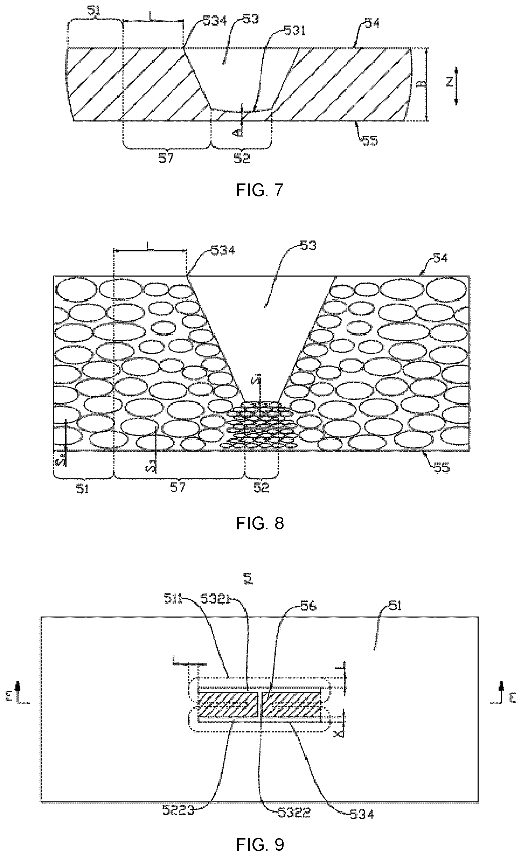

Referring to FIGS. 4 to 7, FIG. 4 is a structural schematic view of the shell component 5 provided in some embodiments of the present disclosure; FIG. 5 is a C-C sectional view of the shell component 5 shown in FIG. 4; FIG. 6 is a partially enlarged view of the part E of the shell component 5 shown in FIG. 5; and FIG. 7 is a partial enlarged view of the shell component 5 provided in some other embodiments of the present disclosure. The embodiment of the present disclosure provides a shell component 5 for a battery cell 10, comprising a non-weak area 51 and a weak area 52 that are integrally formed, wherein the shell component 5 is provided with a groove part 53 by press forming, the non-weak area 51 is formed around the groove part 53, the weak area 52 is formed at the bottom of the groove part 53, and the weak area 52 is configured to be damaged when the internal pressure of the battery cell 10 is released, wherein the minimum thickness of the weak area 52 is A, and the minimum thickness of the non-weak area 51 is B, satisfying 0.05 ≤ A/B ≤ 0.95.

The shell component 5 is a component that can accommodate electrode assembly 2 together with other components. The shell component 5 is a part of shell 1, which can be the end cover 11 of shell 1 as shell component 5, or the casing 12 of shell 1 as shell component 5. The shell component 5 can be made of metal materials, such as copper, iron, aluminum, steel, aluminum alloy, etc. The shell component 5 can be aluminum-plastic film.

The weak area 52 is the weaker part of the shell component 5 compared to other areas. When the internal pressure of the battery cell 10 reaches the threshold, the weak area 52 of the shell component 5 can be destroyed to release the pressure inside the battery cell 10. weak area 52 can be destroyed through rupture, detachment, and other means. For example, when the internal pressure of battery cell 10 reaches the threshold, weak area 52 ruptures under the action of emissions (gas, electrolyte, etc.) inside battery cell 10, allowing the emissions inside battery cell 10 to be discharged smoothly. The weak area 52 can have various shapes, such as rectangular, circular, elliptical, annular, arc-shaped, U-shaped, H-shaped, etc. The thickness of weak area 52 can be uniform or uneven.

The weak area 52 is formed at the bottom of the groove part 53, which can be formed by stamping to achieve the integral forming of the weak area 52 and the non-weak area 51. After stamping the groove part 53 onto the shell component 5, the area where the groove part 53 is set on the shell component 5 is thinned, thereby correspondingly forming a weak area 52. The groove part 53 can be a first stage groove, and along the depth direction of the groove part 53, the groove side of the groove part 53 is continuous. For example, the groove part 53 is a groove with an internal space that is rectangular or cylindrical. The groove part 53 can also be a multi-stage groove, which is arranged along the depth direction of the groove part 53. In adjacent two levels of grooves, the inner (deeper-position) first stage groove is set at the bottom surface of the outer (shallower-position) first stage groove. For example, the groove part 53 is a stepped groove. During molding, multi-stage grooves can be stamped stage by stage along the depth direction of groove part 53, and the weak area 52 is formed at the bottom of the first stage groove located at the deepest position (innermost) in the multi-stage groove.

The non-weak area 51 is formed around the groove part 53, and its strength is greater than that of the weak area 52. The weak area 52 is more susceptible to damage compared to the non-weak area 51. When forming a groove part 53 on the shell component 5 through stamping, the non-weak area 51 can be the part of the shell component 5 that has not been stamped. The thickness of non-weak area 51 can be uniform or uneven.

In FIG. 5-7, the thickness direction of weak area 52 is consistent with that of non-weak area 51, both in the Z direction.

The minimum thickness of weak area 52 is the thickness at the thinnest position of weak area 52. The minimum thickness of non-weak area 51 is the thickness at the thinnest position of non-weak area 51.

As an example, as shown in FIGS. 6 and 7, the shell component 5 has a first surface 54 and a second surface 55 relatively arranged, and the groove part 53 is recessed from the first surface 54 towards the direction close to the second surface 55. The part of the shell component 5 located between the bottom surface 531 of the groove part and the second surface 55 is a weak area 52.

The first surface 54 and the second surface 55 can be set parallel or at a small angle. If the first surface 54 and the second surface 55 are set at a small angle, for example, if the angle between the two is within 10 degrees, the minimum distance between the first surface 54 and the second surface 55 is the minimum thickness of the non-weak area 51. As shown in FIGS. 6 and 7, if the first surface 54 is parallel to the second surface 55, the distance between the first surface 54 and the second surface 55 is the minimum thickness of the non-weak area 51.

The bottom surface 531 of the groove part can be flat or curved. If the bottom surface 531 of the groove part is flat, the bottom surface 531 of the groove part can be parallel to the second surface 55 or set at a small angle. If the bottom surface 531 of the groove part is set at a small angle to the second surface 55, for example, if the angle between the two is within 10 degrees, the minimum distance between the bottom surface 531 of the groove part and the second surface 55 is the minimum thickness of the weak area 52. As shown in FIG. 6, if the bottom surface 531 of the groove part is parallel to the second surface 55, the distance between the bottom surface 531 of the groove part and the second surface 55 is the minimum thickness of the weak area 52. As shown in FIG. 7, if the bottom surface 531 of the groove part is a curved surface, for example, if the bottom surface 531 of the groove part is an arc-shaped surface, the minimum distance between the bottom surface 531 of the groove part and the second surface 55 is the minimum thickness of the weak area 52.

A/B can be a point value of any one of 0.05, 0.06, 0.07, 0.08, 0.1, 0.15, 0.2, 0.25, 0.3, 0.35, 0.4, 0.45, 0.5, 0.55, 0.6, 0.65, 0.7, 0.8, 0.85, 0.9, 0.95 or a range value between any two therein.

In the embodiment of the present disclosure, the weak area 52 and the non-weak area 51 are formed integrally, and the reliability of the shell component 5 is higher. The groove part 53 is formed in the direction of press forming on the shell component 5, and A/B is controlled between 0.05 and 0.95, which can achieve the goal of refining the grain of the weak area 52, thereby improving the material mechanical properties of the weak area 52, enhancing the toughness and fatigue strength of the weak area 52, reducing the risk of damage to the weak area 52 during normal use of the battery cell 10, improving the service life of the battery cell 10, and reducing the risk of explosion of battery cells 10 in the event of thermal runaway.

In some embodiments, 0.12 ≤ A/B ≤ 0.8.

A/B can be a point value of any one of 0.12, 0.13, 0.14, 0.15, 0.17, 0.2, 0.22, 0.25, 0.27, 0.3, 0.32, 0.35, 0.37, 0.4, 0.42, 0.45, 0.47, 0.5, 0.52, 0.55, 0.57, 0.6, 0.62, 0.65, 0.66, 0.67, 0.7, 0.72, 0.75, 0.77, 0.8 or a range value between any two therein.

In this embodiment, 0.12 ≤ A/B ≤ 0.8, the overall performance of external components is improved, ensuring that the weak areas 52 can be timely destroyed in the event of thermal runaway of the battery cell 10, and that the weak areas 52 have sufficient strength during the normal use of the battery cell 10.

In some embodiments, 0.2 ≤ A/B ≤ 0.5.

A/B can be a point value of any one of 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, or a range value between any two therein.

In this embodiment, 0.2 ≤ A/B ≤ 0.5, this further reduces the risk of weak areas 52 being damaged under normal usage conditions of battery cells 10, and ensures that weak areas 52 are promptly damaged in case of thermal runaway of battery cells 10, thereby improving the timeliness of pressure relief.

In some embodiments, 0.02mm ≤ A ≤ 1.6mm.

A can be a point value of any one of 0.02mm, 0.03mm, 0.04mm, 0.05mm, 0.06mm, 0.1mm, 0.15mm, 0.2mm, 0.25mm, 0.3mm, 0.35 mm, 0.4 mm, 0.45 mm, 0.5 mm, 0.55 mm, 0.6 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.42mm, 1.43mm , 1.45 mm, 1.47mm, 1.5 mm, 1.55 mm, 1.6 mm, or a range value between any two therein.

When A < 0.02mm, it is difficult to form weak areas 52, and during the forming process, it is easy to cause damage to weak areas 52. If A >1.6mm, the difficulty of damaging the weak area 52 in the event of thermal runaway of the battery cell 10 increases, which can lead to untimely pressure relief.

Therefore, 0.02mm ≤ A ≤ 1.6mm, while reducing the difficulty of forming the pressure relief area 56, the timely pressure relief of battery cells 10 during thermal runaway is ensured.

In some embodiments, 0.06mm ≤ A ≤ 0.4mm.

A can be a point value of any one of 0.06mm, 0.07mm, 0.08mm, 0.1mm, 0.15mm, 0.18mm, 0.2mm, 0.24mm, 0.25mm, 0.3mm, 0.35mm, 0.4mm, or a range value between any two therein.

In this embodiment, 0.06mm≤A≤0.4mm, this further reduces the difficulty of forming the pressure relief area 56, and ensures the timely pressure relief of battery cells 10 during thermal runaway.

In some embodiments, 1mm ≤ B ≤ 5mm.

B can be a point value of any one of 1mm, 2mm, 3mm, 4mm, 5mm, or a range value between any two therein.

When B>5mm, the thickness of the non-weak area 51 is relatively large, the material used for the shell component 5 is more, and the weight of the shell component 5 is larger, which has poor economic effectiveness. When B<1mm, the thickness of the non-weak area 51 is small, and the deformation resistance of the shell component 5 is poor.

Therefore, 1mm ≤ B ≤ 5mm makes the shell component 5 more economical and have better resistance to deformation.

In some embodiments, 1.2mm ≤ B ≤ 3.5mm.

B can be a point value of any one of 1.2mm, 1.25mm, 1.3mm, 1.4mm, 1.5mm, 1.6mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, or a range value between any two therein.

In the embodiment, 1.2mm ≤ B ≤ 3.5mm, this makes the shell component 5 more economical and have better resistance to deformation.

Further, 2mm≤B≤3mm.

In some embodiments, referring to FIG. 8, FIG. 8 is a grain view (schematic diagram
) of the shell component 5 shown in FIG. 5. The average grain size of the weak area 52 is S₁, and the average grain size of the non-weak area 51 is S₂, satisfying S₁/S₂ ≤ 0.9.

The measurement method for average grain size can refer to the intercept method in GB 6394-2017, which will not be elaborated here. When measuring the average grain size of weak area 52, measurements can be taken along the thickness direction of weak area 52. When measuring the average grain size of non-weak area 51, measurements can be taken along the thickness direction of non-weak area 51.

S₁/S₂ can be a point value of any one of 0.01, 0.03, 0.04, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, or a range value between any two therein.

In the embodiment, S₁/S₂≤0.9, the average grain size of the weak area 52 differs significantly from that of the non-weak area 51. Reducing the average grain size of the weak area 52 can refine the grain of the weak area 52, improve the material mechanical properties of the weak area 52, and further enhance the toughness and fatigue strength of the weak area 52, which reduces the risk of weak area 52 being damaged under normal usage conditions of battery cell 10, and improves the service life of battery cell 10.

In some embodiments, S₁/S₂≥ 0.05.

The inventor noticed that when S₁/S₂<0.05, it is more difficult to form weak areas 52, the strength of the weak area 52 is too large, and the difficulty of damaging the weak area 52 in the event of thermal runaway of the battery cell 10 increases, which can lead to untimely pressure relief.

Therefore, S₁/S₂≥0.05, while reducing the difficulty of forming the weak area 52, the timely pressure relief of battery cells 10 during thermal runaway is ensured.

In some embodiments, 0.1 ≤ S₁/S₂ ≤ 0.5.

S₁/S₂ can be a point value of any one of 0.1, 0.12, 0.15, 0.17, 0.2, 0.22, 0.25, 0.27, 0.3, 0.32, 0.35, 0.37, 0.4, 0.42, 0.45, 0.47, 0.5, or a range value between any two therein.

In this embodiment, 0.1 ≤ S₁/S₂ ≤ 0.5, the overall performance of shell component 5 is improved, ensuring that the weak areas 52 can be timely destroyed in the event of thermal runaway of the battery cell 10, and that the weak areas 52 have sufficient strength during the normal use of the battery cell 10.

In some embodiments, 0.4µm ≤ S₁ ≤ 75µm.

S₁ can be a point value of any one of 0.4µm, 0.5µm, 1µm, 2µm, 3µm, 4µm, 5µm, 10µm, 15µm, 16µm, 20µm, 25µm, 28µm, 30µm, 35µm, 36µm, 40µm, 45µm, 47.5µm, 48µm, 49µm, 50µm, 55µm, 60µm, 65µm, 70µm, 72µm, 75µm, or a range value between any two therein.

The inventor noticed that when S₁ > 75µm, the toughness and fatigue strength of weak area 52 are poor; and when S₁ <0.4mm, it is difficult to form weak areas 52, the strength of the weak area 52 is too large, and the difficulty of damaging the weak area 52 in the event of thermal runaway of the battery cell 10 increases, which can lead to untimely pressure relief.

Therefore, 0.1µm ≤ S1 ≤ 75µm, on the one hand, it reduces the difficulty of forming weak areas 52 and ensures the timely pressure relief of battery cells 10 in the event of thermal runaway; and on the other hand, it improves the toughness and fatigue resistance of the weak area 52, thereby reducing the risk of damage to the weak area 52 under normal usage conditions of the battery cell 10.

In some embodiments, 1µm ≤ S₁ ≤ 10µm.

S₁ can be a point value of any one of 1µm, 1.5µm, 1.6µm, 2µm, 2.5µm, 2.6µm, 3µm, 3.3µm, 3.5µm, 3.6µm, 4µm, 4.5µm, 4.6µm, 5µm, 5.5µm, 5.6µm, 6µm, 6.5µm, 6.6µm, 6.7µm, 7µm, 7.5µm, 7.6µm, 8µm, 8.5µm, 8.6µm, 9µm, 9.5µm, 9.6µm, 10µm, or a range value between any two therein.

In this embodiment, 1µm ≤ S₁ ≤ 10µm, the overall performance of shell component 5 is improved, ensuring that the weak areas 52 can be timely destroyed in the event of thermal runaway of the battery cell 10, and that the weak areas 52 have sufficient strength during the normal use conditions of the battery cell 10.

In some embodiments, 10µm ≤ S₂ ≤ 150µm.

S₂ can be a point value of any one of 10µm, 13µm, 14µm, 15µm, 20µm, 25µm, 30µm, 32µm, 35µm, 40µm, 45µm, 50µm, 55µm, 60µm, 65µm, 70µm, 75µm, 80µm, 85µm, 90µm, 95µm, 100µm, 105µm, 110µm, 115µm, 120µm, 125µm, 130µm, 135µm, 140µm, 145µm, 150µm, or a range value between any two therein.

In some embodiments, 30µm ≤ S₂ ≤ 100µm.

S₂ can be a point value of any one of 30µm, 32µm, 35µm, 37µm, 40µm, 42µm, 45µm, 47µm, 50µm, 52µm, 55µm, 57µm, 60µm, 62µm, 65µm, 67µm, 70µm, 72µm, 75µm, 77µm, 80µm, 82µm, 85µm, 87µm, 90µm, 92µm, 95µm, 97µm, 100µm, or a range value between any two therein.

In some embodiments, the average grain size of the weak area 52 is S₁, satisfying 1≤A/S₁≤100.

A/S₁ can be a point value of any one of 1, 1.25, 1.5, 2, 3.125, 4, 4.8, 5, 7.5, 10, 15, 16, 20, 21, 22, 23, 24, 25, 30, 33, 34, 35, 37, 38, 40, 45, 48, 50, 55, 56, 60, 64, 65, 70, 75, 76, 78, 80, 85, 90, 93, 94, 95, 100, or a range value between any two therein.

If A/S₁ <1, in the thickness direction of the weak area 52, the number of grain layers in the weak area 52 is less, and the fatigue strength of the weak area 52 is too small; and if A/S₁>100, in the thickness direction of the weak area 52, there are too many grain layers in the weak area 52, and the strength of the weak area 52 is too large, which is prone to the risk of the weak area 52 not being damaged in time when the battery cell 10 undergoes thermal runaway.

Therefore, 1 ≤ A/S₁ ≤ 100, on the one hand, increases the number of grain layers in the thickness direction of the weak area 52, improves the fatigue strength of the weak area 52, and reduces the risk of damage to the weak area 52 under normal usage conditions of the battery cell 10; and on the other hand, enables the weak areas 52 to be more timely destroyed in the event of thermal runaway of battery cells 10, in order to achieve the goal of timely pressure relief.

In some embodiments, 5 ≤ A/S₁ ≤ 20.

A/S₁ can be a point value of any one of 5, 5.5, 6, 6.5, 7, 7.5, 8, 8.4, 8.5, 8.8, 8.9, 9, 9.5, 9.6, 10, 10.5, 11, 11.4, 11.5, 12, 12.5, 13, 13.5, 14, 14.5, 15, 15.5, 16, 16.5, 17, 17.5, 18, 18.5, 19, 19.5, 20, or a range value between any two therein.

In this embodiment, 5 ≤ A/ S₁ ≤ 20, the overall performance of shell component 5 is improved, ensuring that the weak areas 52 can be timely destroyed in the event of thermal runaway of the battery cell 10, and that the weak areas 52 have sufficient fatigue strength during the normal use conditions of the battery cell 10, so as to improve the service life of the battery cell 10.

In some embodiments, the hardness of the weak area 52 is H₁, satisfying 5HBW/mm≤H₁/A≤10000 HBW/mm.

H₁/A can be a point value of any one of 5HBW/mm, 6HBW/mm, 7HBW/mm, 20HBW/mm, 31HBW/mm, 32HBW/mm, 37.5HBW/mm, 42HBW/mm, 43HBW/mm, 50HBW/mm, 60HBW/mm, 61HBW/mm, 62HBW/mm, 63HBW/mm, 64HBW/mm, 75HBW/mm, 90HBW/mm, 100HBW/mm, 120 HBW/mm, 150HBW/mm, 190HBW/mm, 500HBW/mm, 1000HBW/mm, 1200HBW/mm, 1750HBW/mm, 1800HBW/mm, 2100 HBW/mm, 4000HBW/mm, 5000 HBW/mm, 8000HBW/mm, 9000 HBW/mm and 10000HBW/mm, or a range value between any two therein.

The hardness of weak area 52 is Brinell hardness, measured in HBW. The measurement method of Brinell hardness can be implemented according to the measurement principle in GBIT 23.1-2018. In the actual measurement process, the hardness of weak area 52 can be measured on the inner or outer surface in the thickness direction of weak area 52. Taking the shell component 5 being end cover 11 of the battery cell 10 as an example, the hardness of the weak area 52 can be measured on the outer surface of the weak area 52 facing away from the interior of the battery cell 10, or on the inner surface of the weak area 52 facing towards the interior of the battery cell 10.

When H₁/A>10000HBW/mm, the weak area 52 is relatively thin and has a high hardness, which can cause the weak area 52 to be very thin and brittle. The weak area 52 is easily damaged under the normal use conditions of battery cell 10, and the service life of battery cell 10 is relatively short. When H₁/A<5HBW/mm, the weak area 52 is thicker and has lower hardness. When the thermal runaway of battery cell 10 occurs, the weak area 52 will be stretched and extended, resulting in poor pressure relief timeliness.

In the embodiment, not only considering the influence of the thickness of the weak area 52 on the performance of the shell component 5, but also considering the influence of the hardness of the weak area 52 on the performance of the shell component 5, 5HBW/mm ≤ H₁/A ≤ 10000 HBW/mm can make the weak area 52 have sufficient strength under normal use conditions of the battery cell 10, and the weak area 52 not easily damaged by fatigue, thereby improving the service life of the battery cell 10; and can also enable the shell component 5 to release pressure in a timely manner through weak areas 52 when the battery cell 10 loses thermal control, thereby reducing the explosion risk of battery cell 10 and improving the safety of the battery cell 10.

In some embodiments, 190HBW/mm≤H₁/A≤4000 HBW/mm.

H₁/A can be a point value of any one of 190HBW/mm, 250HBW/mm, 280 HBW/mm, 300HBW/mm, 350HBW/mm, 400HBW/mm, 450HBW/mm, 500HBW/mm, 600HBW/mm, 700HBW/mm, 875HBW/mm, 1000HBW/mm, 1200HBW/mm, 1500HBW/mm, 1750HBW/mm, 1800HBW/mm, 2000HBW/mm, 2100 HBW/mm, 2500HBW/mm, 3000HBW/mm, 3500HBW/mm, 4000HBW/mm, or a range value between any two therein.

In this embodiment, 190HBW/mm≤H₁/A≤4000HBW/mm, the overall performance of shell component 5 is improved, ensuring that the weak areas 52 can be timely destroyed in the event of thermal runaway of the battery cell 10, and that the weak areas 52 have sufficient strength during the normal use conditions of the battery cell 10. On the premise of ensuring the safety of battery cells 10, the service life of battery cells 10 is improved.

In some embodiments, the hardness of the weak area 52 is H₁, and the hardness of the non-weak area 51 is H₂, satisfying H₁>H₂.

The hardness of non-weak area 51 is Brinell hardness, measured in HBW. In the actual measurement process, the hardness of non-weak area 51 can be measured on the inner or outer surface in the thickness direction of non-weak area 51. Taking the shell component 5 being end cover 11 of the battery cell 10 as an example, the hardness of the non-weak area 51 can be measured on the outer surface of the non-weak area 51 facing away from the interior of the battery cell 10, or on the inner surface of the non-weak area 51 facing towards the interior of the battery cell 10.

In the embodiment, H₁>H₂, it is equivalent to increasing the hardness of the weak area 52, thereby enhancing its strength and reducing the risk of damage to the weak area 52 under normal usage conditions of the battery cell 10.

In some embodiments, H₁/H₂≤ 5.

H₁/H₂ can be a point value of any one of 1.1, 1.5, 2, 2.5, 3, 3.5, 3.6, 4, 4.5, or 5, or a range value between any two therein.

If H₁/H₂>5, it may cause the hardness of weak area 52 to be too large, and it may be difficult for weak area 52 to be damaged during thermal runaway of battery cell 10.

Therefore, H₁/H₂≤5 reduces the risk of weak areas 52 being unable to be damaged in a timely manner during thermal runaway of battery cells 10, and improves the safety of battery cells 10.

If H₁/H₂ is too large, it may be difficult to damage the weak area 52 during the thermal runaway of the battery cell 10. Therefore, H₁/H₂≤5 reduces the risk of weak areas 52 being unable to be damaged in a timely manner during thermal runaway of battery cells 10, and improves the safety of battery cells 10.

In some embodiments, H₁/H₂≤ 2.5.

H₁/H₂ can be a point value of any one of 1.1, 1.11, 1.12, 1.2, 1.25, 1.3, 1.4, 1.5, 1.6, 1.7, 1.71, 1.72, 1.8, 1.9, 2, 2.1, 2.2, 2.3, 2.4, 2.5, or a range value between any two therein.

In the embodiment, H₁/H₂≤2.5, this can further reduce the risk of weak areas 52 being unable to be damaged in a timely manner during thermal runaway of battery cells 10.

In some embodiments, 5HBW ≤ H₂ ≤ 150HBW.

H₂ can be a point value of any one of 5HBW, 8HBW, 9 HBW, 9.5 HBW, 10HBW, 12HBW, 13HBW, 15HBW, 16 HBW, 19HBW, 20HBW, 30HBW, 40 HBW, 50HBW, 52HBW, 52.5HBW, 53HBW, 60 HBW, 70HBW, 80HBW, 90HBW, 100HBW, 110HBW, 120HBW, 130HBW, 140HBW, 150HBW, or a range value between any two therein.

In some embodiments, 5HBW ≤ H₁ ≤ 200HBW.

H₁ can be a point value of any one of 5HBW, 6 HBW, 8HBW, 10HBW, 15HBW, 19HBW, 20HBW, 22.8HBW, 30HBW, 32HBW, 40HBW, 50HBW, 60 HBW, 70HBW, 80HBW, 90HBW, 100HBW, 110HBW, 120HBW, 130HBW, 140HBW, 150HBW, 160HBW, 170HBW, 180HBW, 190HBW, 200HBW, or a range value between any two therein.

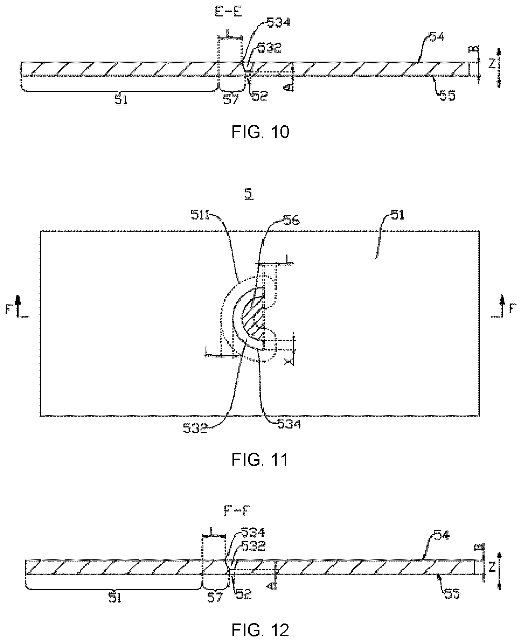

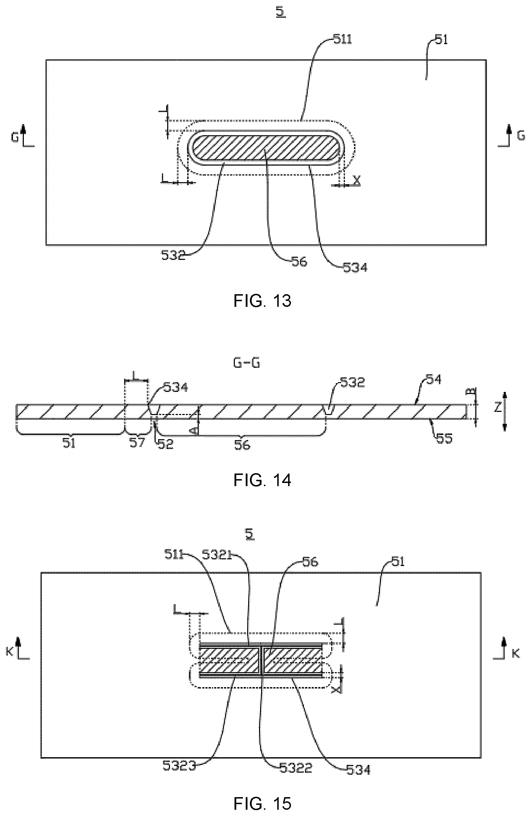

In some embodiments, referring to FIGS. 9 to 14, FIG. 9 is a structural schematic view (showing the first stage notching groove 532) of the shell component 5 provided in some other embodiments of the present disclosure; FIG. 10 is a E-E sectional view of the shell component 5 shown in FIG. 9; FIG. 11 is a structural schematic view (showing the first stage notching groove 532) of the shell component 5 provided in some other embodiments of the present disclosure; FIG. 12 is a F-F sectional view of the shell component 5 shown in FIG. 11; FIG. 13 is a structural schematic view (showing the first stage notching groove 532) of the shell component 5 provided in some other embodiments of the present disclosure; and FIG. 14 is a G-G sectional view of the shell component 5 shown in FIG. 13. The shell component 5 has a pressure relief area 56, wherein the groove part 53 includes a first stage notching groove 532, the notching groove 532 is set along the edge of the pressure relief area 56, the pressure relief area 56 is configured to open with the notching groove 532 as the boundary, and the weak area 52 forms the bottom of the notching groove 532.

The pressure relief area 56 is the area where shell component 5 can open after weak area 52 is damaged. For example, when the internal pressure of battery cell 10 reaches the threshold, the weak area 52 cracks, and the pressure relief area 56 opens outward under the action of the discharge inside battery cell 10. During this process, the weak area 52 cracks along the notching groove 532, and the pressure relief area 56 opens, thereby achieving the opening of the pressure relief area 56 with the notching groove 532 as the boundary. After the pressure relief area 56 is opened, the shell component 5 can form a discharge port at the position corresponding to the pressure relief area 56. The discharge inside the battery cell 10 can be discharged through the discharge port to release the pressure inside the battery cell 10.

The notching groove 532 can be formed on the shell component 5 by stamping. The notching groove 532 in groove part 53 is only a first stage groove, which can be formed by a single stamping. The notching groove 532 can be of various shapes, such as annular groove, arc-shaped groove, U-shaped groove, H-shaped groove, etc. The weak area 52 is formed at the bottom of the notching groove 532, and its shape is the same as that of the notching groove 532. For example, the weak area 52 is a U-shaped groove, which extends along the U-shaped trajectory.

As an example, the maximum width of notching groove 532 is X, wherein X ≤ 10mm. The width of the widest position of notching groove 532 is the maximum width of notching groove 532.

In this embodiment, the weak area 52 forms the bottom of the notching groove 532. When the weak area 52 is damaged, the pressure relief area 56 can be opened with the weak area 52 as the boundary to achieve pressure relief, increasing the pressure relief area of the shell component 5.

In some embodiments, continuing to refer to FIGS. 10, 12, and 14, the shell component 5 has a first surface 54 and a second surface 55 relatively arranged, and the notching groove 532 is recessed from the first surface 54 towards the direction close to the second surface 55.

The first surface 54 can be the inner surface of the shell component 5 facing the interior of the battery cell 10, and the second surface 55 can be the outer surface of the shell component 5 facing away from the interior of the battery cell 10. It can also be that the first surface 54 is the outer surface of the shell component 5 facing away from the interior of the battery cell 10, and the second surface 55 is the inner surface of the shell component 5 facing towards the interior of the battery cell 10. As an example, the first surface 54 is parallel to the second surface 55, and the minimum thickness of the non-weak area 51 is the distance between the first surface 54 and the second surface 55.

The bottom surface of notching groove 532 is the bottom surface 531 of groove part. The part of shell component 5 between the bottom surface of notching groove 532 and the second surface 55 is the bottom wall of notching groove 532, which is the weak area 52.

In this embodiment, the groove part 53 only includes a first stage notching groove 532, which is the groove part 53. The groove part 53 is the first stage groove, with a simple structure. During molding, the notching groove 532 can be formed on the first surface 54 for easy molding, improving production efficiency and reducing production costs.

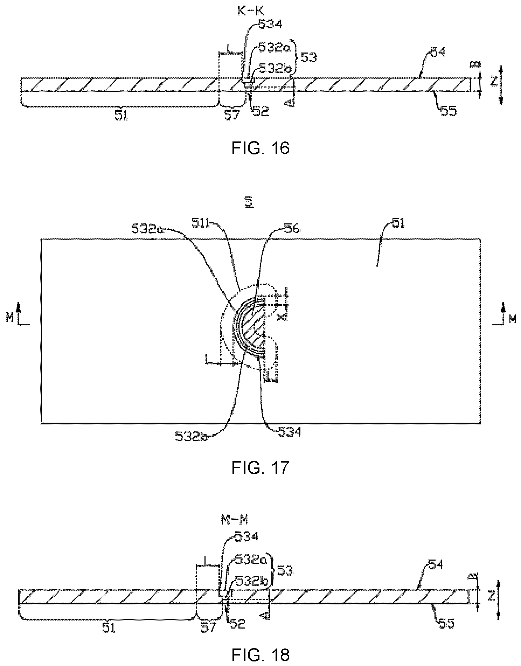

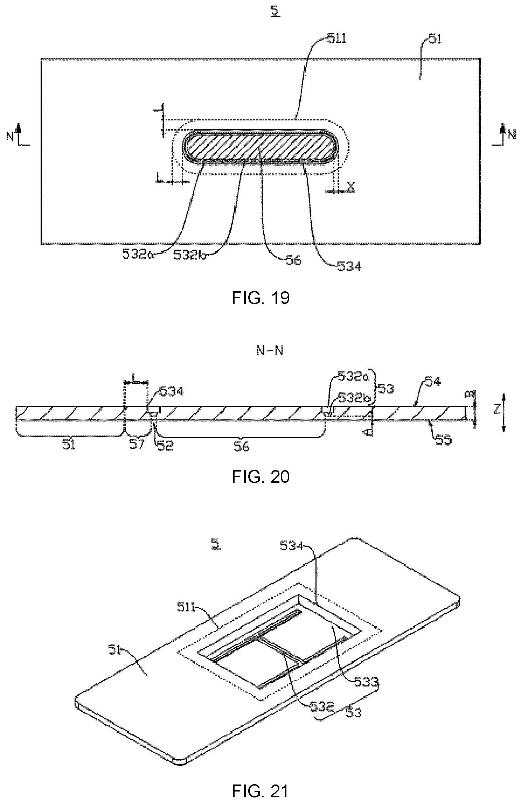

In some embodiments, referring to FIGS. 15 to 20, FIG. 15 is a structural schematic view (showing two levels of notching grooves 532) of the shell component 5 provided in some other embodiments of the present disclosure; FIG. 16 is a K-K sectional view of the shell component 5 shown in FIG. 15; FIG. 17 is a structural schematic view (showing two levels of notching grooves 532) of the shell component 5 provided in some other embodiments of the present disclosure; FIG. 18 is a M-M sectional view of the shell component 5 shown in FIG. 17; FIG. 19 is a structural schematic view (showing two levels of notching grooves 532) of the shell component 5 provided in some other embodiments of the present disclosure; and FIG. 20 is a N-N sectional view of the shell component 5 shown in FIG. 19. The shell component 5 includes a first surface 54 and a second surface 55 that are relatively arranged, and the groove part 53 includes multi-stage notching grooves 532, wherein the multi-stage notching grooves 532 are sequentially arranged along the direction from the first surface 54 to the second surface 55 on the shell component 5; and the weak area 52 is formed at the bottom of the first stage notching groove 532, which is farthest from the first surface 54. The shell component 5 has a pressure relief area 56, and each stage of the notching groove 532 is set along the edge of the pressure relief area 56. The pressure relief area 56 is configured to open with the first stage notching groove 532 farthest from the first surface 54 as the boundary.

The groove part 53 includes a multi-stage notching groove 532, and it can be understood that the groove part 53 is a multi-stage groove. Each stage of notching groove 532 is set along the edge of the pressure relief area 56. It can be understood that each stage of notching groove 532 is set around the pressure relief area 56, so that the extension directions of the multi-stage notching grooves 532 are basically the same, and the shapes of the multi-stage notching grooves 532 are basically the same. The notching groove 532 in groove part 53 can be of two, three, four, or more stages. Each stage of notching groove 532 can be formed on the shell component 5 by stamping. During molding, various stages of notching grooves 532 can be formed by sequentially stamping along the direction from the first surface 54 to the second surface 55. When stamping to form a multi-stage notching groove 532, multiple stamping can be used to form a corresponding multi-stage notching groove 532, with each stamping forming one stage of notching groove 532. The notching groove 532 can be of various shapes, such as annular groove, arc-shaped groove, U-shaped groove, H-shaped groove, etc.

The pressure relief area 56 is the area where shell component 5 can open after weak area 52 is damaged. The first stage notching groove 532 farthest from the first surface 54 is located at the edge of the pressure relief area 56. During the opening process of the pressure relief area 56, the weak area 52 cracks along the first stage notching groove 532 farthest from the first surface 54, thereby achieving the opening of the pressure relief area 56 with the first stage notching groove 532 farthest from the first surface 54 as the boundary.

The weak area 52 is formed at the bottom of the first stage notching groove 532 farthest from the first surface 54, and the first stage notching groove 532 farthest from the first surface 54 is the first stage notching groove 532 at the deepest position (innermost). In the adjacent two stages of notching grooves 532, the first stage notching groove 532 far from the first surface 54 is set on the bottom surface of the first stage notching groove 532 near the first surface 54. The part of shell component 5 between the bottom surface of the first stage notching groove 532 farthest from the first surface 54 and the second surface 55 is the bottom wall of the first stage notching groove 532 farthest from the first surface 54, which is the weak area 52. The bottom surface of the first stage notching groove 532, which is farthest from the first surface 54, is the bottom surface 531 of the groove part. The first stage notching groove 532 farthest from the first surface 54 is the innermost first stage notching groove 532b, and the first stage notching groove 532 closest to the first surface 54 is the outermost first stage notching groove 532a.

As an example, the maximum width of the outermost first stage notching groove 532a is X, with X ≤ 10mm. The width of the widest position of the outermost first stage notching groove 532a is the maximum width of the outermost first stage notching groove 532a.

During molding, multi-stage notching grooves 532 can be formed on the shell component 5 stage by stage, which can reduce the molding depth of each stage of notching groove 532, thereby reducing the molding force on the shell component 5 when forming each stage of notching groove 532, and reducing the risk of cracking on the shell component 5. The shell component 5 is less likely to fail due to generating cracking at the location of the notching groove 532, thereby improving the service life of the shell component 5.

In some embodiments, referring to FIGS. 16, 18, and 20, the first stage notching groove 532 farthest from the second surface 55 is recessed from the first surface 54 towards the direction close to the second surface 55.

Taking the notching grooves 532 in groove part 53 being of two stages as an example, the two stages of notching grooves 532 are the first stage notching groove and the second stage notching groove, respectively. The first stage notching groove is set on the first surface 54, that is, the first stage notching groove is concave from the first surface 54 towards the direction close to the second surface 55, and the second stage notching groove is set on the bottom surface of the first stage notching groove. The second stage notching groove is concave from the bottom surface of the first stage notching groove towards the direction close to the second surface 55. The first stage notching groove is the outermost first stage notching groove 532a, and the second stage notching groove is the innermost first stage notching groove 532b.

The groove part 53 is composed of multi-stage notching grooves 532. During forming, multi-stage notching grooves 532 can be gradually machined in the direction from the first surface 54 to the second surface 55, resulting in higher forming efficiency.

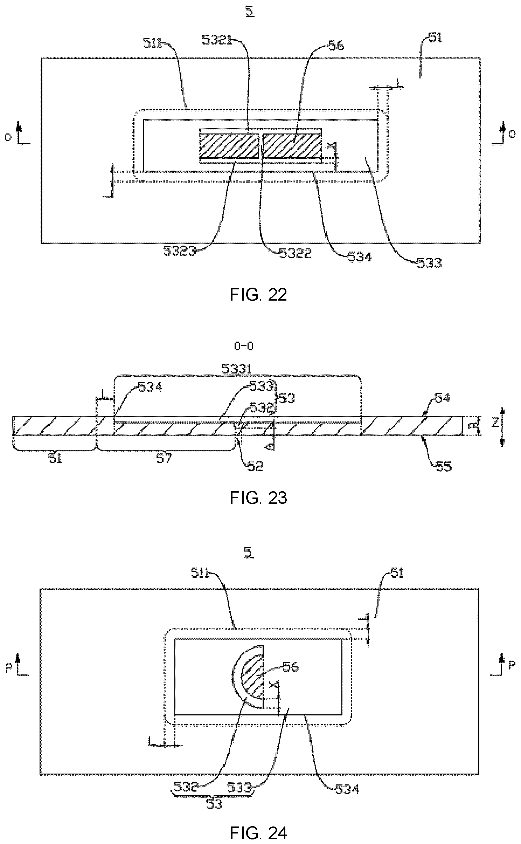

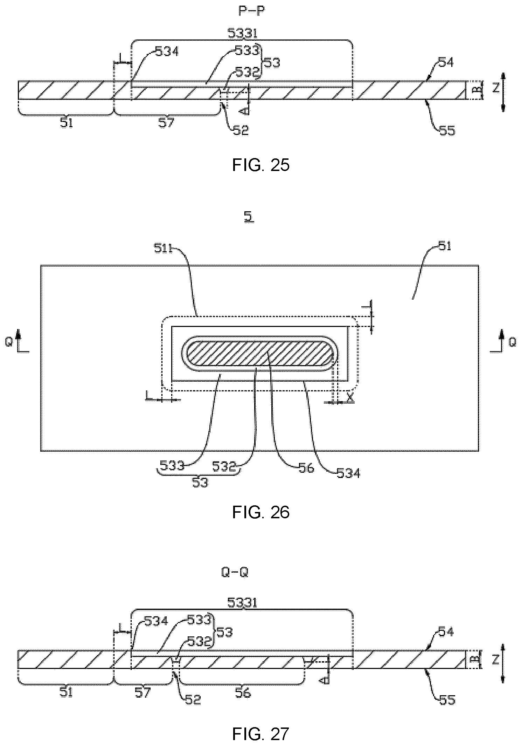

In some embodiments, referring to FIGS. 21 to 27, FIG. 21 is an axonometric drawing of the shell component 5 provided in some embodiments of the present disclosure; FIG. 22 is a structural schematic view (showing the first stage notching groove 532 and the first stage sink groove 533) of the shell component 5 shown in FIG. 21; FIG. 23 is a O-O sectional view of the shell component 5 shown in FIG. 22; FIG. 24 is a structural schematic view (showing the first stage notching groove 532 and the first stage sink groove 533) of the shell component 5 provided in some other embodiments of the present disclosure; FIG. 25 is a P-P sectional view of the shell component 5 shown in FIG. 24; FIG. 26 is a structural schematic view (showing the first stage notching groove 532 and the first stage sink groove 533) of the shell component 5 provided in some other embodiments of the present disclosure; and FIG. 27 is a Q-Q sectional view of the shell component 5 shown in FIG. 26. The shell component 5 includes a first surface 54 and a second surface 55 that are relatively arranged, and the groove part 53 also includes a first stage sink groove 533, wherein the sink groove 533 is recessed from the first surface 54 towards the direction close to the second surface 55, and the pressure relief area 56 is formed on the bottom wall 5331 of the sink groove.

It should be noted that regardless of whether the notching groove 532 in the groove part 53 is of a single stage or multiple stages, the groove part 53 can include a first stage sink groove 533. Understandably, there are both notching groove 532 and sink groove 533 in groove part 53, and the groove part 53 is a multi-stage groove. The sink groove 533 and the notching groove 532 are set along the direction from the first surface 54 to the second surface 55. During molding, a sink groove 533 can be formed on the shell component 5 first, and then a notching groove 532 can be formed on the bottom wall 5331 of the sink groove. The sink groove 533 can be formed on the shell component 5 by stamping.

The bottom wall 5331 of the sink groove is the part of the shell component 5 located below the bottom surface of the sink groove 533. After forming the sink groove 533 on the first surface 54, the remaining part of the shell component 5 in the area where the sink groove 533 is set is the bottom wall 5331 of the sink groove. As shown in FIGS. 23, 25, and 27, the portion of the shell component 5 located between the bottom surface of the sink groove 533 and the second surface 55 is the bottom wall 5331 of the sink groove. The pressure relief area 56 can be a part of the bottom wall 5331 of the sink groove.

The setting of the sink groove 533 can reduce the depth of the notching groove 532 while ensuring a certain thickness of the final weak area 52, thereby reducing the forming force on the shell component 5 during the formation of the notching groove 532 and reducing the risk of generating cracking on the shell component 5. In addition, the sink groove 533 can provide avoidance space for the pressure relief area 56 during the opening process. Even if the first surface 54 is obstructed by obstacles, the pressure relief area 56 can still be opened to release the pressure.

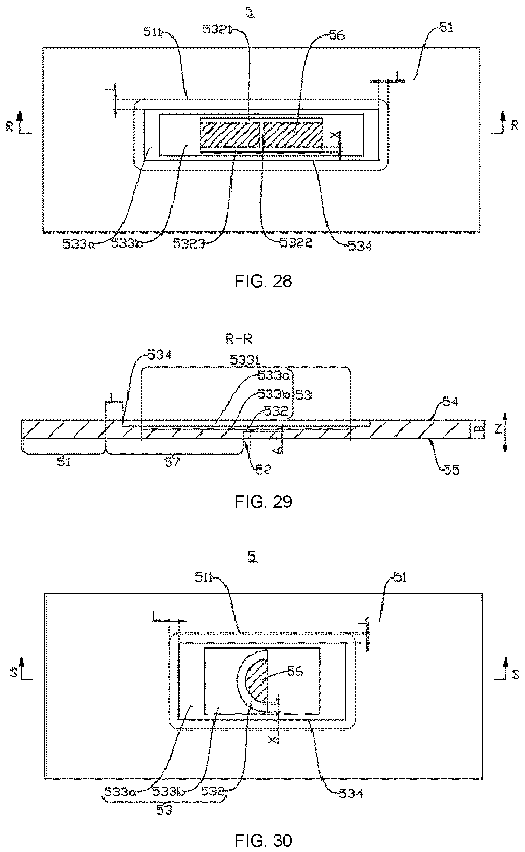

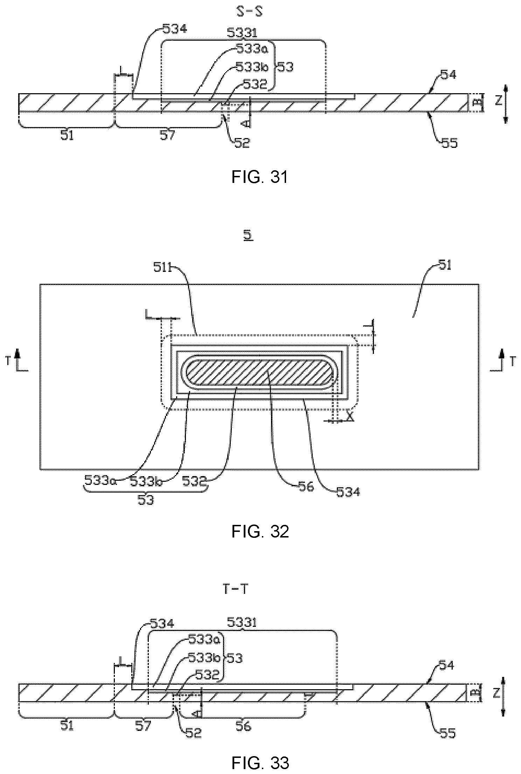

In some embodiments, referring to FIGS. 28 to 33, FIG. 28 is a structural schematic view (showing the first stage notching groove 532 and two levels of sink grooves 533) of the shell component 5 provided in some embodiments of the present disclosure; FIG. 29 is a R-R sectional view of the shell component 5 shown in FIG. 28; FIG. 30 is a structural schematic view (showing the first stage notching groove 532 and two levels of sink grooves 533) of the shell component 5 provided in some other embodiments of the present disclosure; FIG. 31 is a S-S sectional view of the shell component 5 shown in FIG. 30; FIG. 32 is a structural schematic view (showing the first stage notching groove 532 and two levels of sink grooves 533) of the shell component 5 provided in some other embodiments of the present disclosure; and FIG. 33 is a T-T sectional view of the shell component 5 shown in FIG. 32. The shell component 5 includes a first surface 54 and a second surface 55 that are relatively arranged, and the groove part 53 also includes multi-stage sink grooves 533, wherein the multi-stage sink grooves 533 are sequentially arranged along the direction from the first surface 54 to the second surface 55 on the shell component 5; the first stage sink groove 533 farthest from the second surface 55 is concave from the first surface 54 towards the second surface 55; and the pressure relief area 56 is formed on the bottom wall 5331 of the first stage sink groove farthest from the first surface 54.

It should be noted that regardless of whether the notching groove 532 in the groove part 53 is of a single stage or multiple stages, the groove part 53 can include a multi-stage sink groove 533. Understandably, there are both notching groove 532 and sink groove 533 in groove part 53, and the groove part 53 is a multi-stage groove. The sink groove 533 and the notching groove 532 are set along the direction from the first surface 54 to the second surface 55. During molding, multi-stage sink grooves 533 can be formed on the shell component 5 first, and then a notching groove 532 can be formed on the bottom wall 5331 of the first stage sink groove furthest from the first surface 54.

The first stage sink groove 533, which is farthest from the second surface 55 (closest to the first surface 54), is the outermost first stage sink groove 533a, and the first stage sink groove 533, which is farthest from the first surface 54, is the innermost first stage sink groove 533b. The outermost first stage sink groove 533a is set on the first surface 54, and the outermost first stage sink groove 533a is concave from the first surface 54 towards the second surface 55.

The groove bottom wall 5331 of the first stage sink groove farthest from the first surface 54 is the part of the shell component 5 located below the groove bottom surface of the first stage sink groove 533 farthest from the first surface 54. After forming a multi-stage sink groove 533 on the shell component 5, the residual part of the shell component 5 in the area where the first stage sink groove 533 farthest from the first surface 54 is set is the groove bottom wall 5331 of the sink groove. As shown in FIGS. 29, 31, and 33, the portion of the shell component 5 located between the bottom surface of the first stage sink groove 533 farthest from the first surface 54 and the second surface 55 is the bottom wall 5331 of the first stage sink groove farthest from the first surface 54. The pressure relief area 56 can be a part of the bottom wall 5331 of the first stage sink groove farthest from the first surface 54.

The sink groove 533 in groove part 53 can be of two, three, four, or more stages. In the adjacent two stages of sink grooves 533, the first stage sink groove 533 far from the first surface 54 is set on the bottom surface of the first stage sink groove 533 near the first surface 54. Along the direction from the first surface 54 to the second surface 55, the contour of the bottom surface of the multi-stage sink groove 533 decreases stage by stage. Each stage of sink groove 533 can be formed on the shell component 5 by stamping. During the molding process, various stages of sink grooves 533 can be sequentially stamped along the direction from the first surface 54 to the second surface 55, and then the notching groove 532 is stamped. Taking the example that the sink grooves 533 in the groove part 53 are of two stages and the notching groove 532 is of a single stage, during stamping forming, two stamping processes can be carried out first to form a two-stage sink groove 533 correspondingly, and then another stamping process can be carried out to form a first stage notching groove 532 correspondingly. As an example, in FIGS. 28-33, the sink groove 533 in the groove part 53 is in a two-stage structure.

When forming multi-stage sink grooves 533, the forming depth of each stage of sink groove 533 can be reduced, which can reduce the forming force on the shell component 5 during the forming of each stage of sink groove 533, and reduce the risk of generating cracking on the shell components 5. In addition, the multi-stage sink grooves 533 can provide avoidance space for the pressure relief area 56 during the opening process. Even if the first surface 54 is obstructed by obstacles, the pressure relief area 56 can still be opened to release the pressure.

In some embodiments, the internal space of the sink groove 533 is of a cylinder, prismoid, circular truncated cone, or frustum.

The internal space of sink groove 533 is limited by the side and bottom surfaces of the sink groove 533. The prismoid can be triangular prism
, quadrangular prism, pentagonal prism, hexagonal prisms, etc. The frustum can be a triangular frustum, a quadrangular frustum, a pentagonal frustum, a hexagonal frustum, etc. As an example, in FIGS. 21-33, the internal space of groove part 53 is of a quadrangular prism, and specifically, the internal space of groove part 53 is of a cuboid.

In this embodiment, the sink groove 533 has a simple structure, is easy to form, and can provide more avoidance space for the pressure relief area 56 during the opening process.

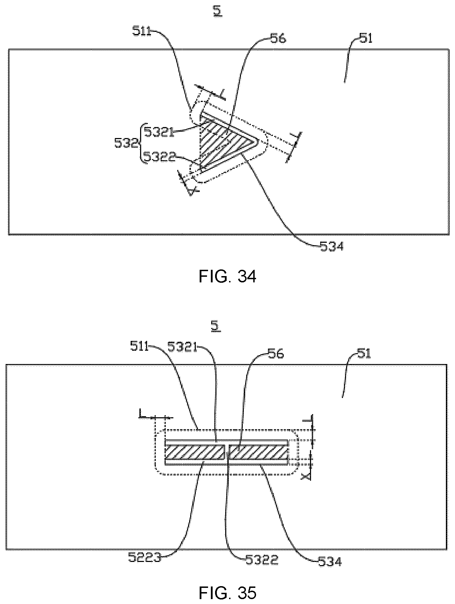

In some embodiments, referring to FIG. 34, FIG. 34 is a structural schematic view (showing the first stage notching groove 532 in V shape) of the shell component 5 provided in some embodiments of the present disclosure. The notching groove 532 includes a first groove segment 5321 and a second groove segment 5322. The first groove segment 5321 intersects with the second groove segment 5322, and the first groove segment 5321 and the second groove segment 5322 are set along the edge of the pressure relief area 56.

The first groove segment 5321 and the second groove segment 5322 can be linear grooves or non-linear grooves, such as arc-shaped grooves. In the embodiment where the first groove segment 5321 and the second groove segment 5322 are both linear grooves, it can be understood that the first groove segment 5321 and the second groove segment 5322 both extend along the straight line, and the first groove segment 5321 and the second groove segment 5322 can be set at acute, right or obtuse angles. The first groove segment 5321 and the second groove segment 5322 can be set in a cross manner, for example, the intersection position of the first groove segment 5321 and the second groove segment 5322 is located at the midpoint positions of the first groove segment 5321 and the second groove segment 5322. As shown in FIG. 34, the intersection position of the first groove segment 5321 and the second groove segment 5322 can also be located at one end of the first groove segment 5321 and one end of the second groove segment 5322. The first groove segment 5321 and the second groove segment 5322 form a V-shaped structure, and the notching groove 532 is V-shaped.

In the embodiment, the stress at the intersection position of the first groove segment 5321 and second groove segment 5322 is more concentrated, allowing the weak area 52 to be the first to be damaged at the intersection position of the first groove segment 5321 and second groove segment 5322. When the detonation pressure of the battery cell 10 is constant, the weak area 52 can be made thicker to reduce the forming depth of the notching groove 532.

In some embodiments, referring to FIGS. 9, 15, 22 and 28, the notching groove 532 further can include a third groove segment 5323, wherein the first groove segment 5321 and the third groove segment 5323 are set opposite to each other, the second groove segment 5322 and the third groove segment 5323 intersect, and the first groove segment 5321, the second groove segment 5322, and the third groove segment 5323 are set along the edge of the pressure relief area 56.

The first groove segment 5321, the second groove segment 5322, and the third groove segment 5323 can all be linear grooves or non-linear grooves, such as arc-shaped grooves. In the embodiments where the first groove segment 5321, the second groove segment 5322, and the third groove segment 5323 are all linear grooves, it can be understood that the first groove segment 5321, the second groove segment 5322, and the third groove segment 5323 all extend along the straight line. The first groove segment 5321 and the third groove segment 5323 can be set in parallel or at an angle. The first groove segment 5321 and the third groove segment 5323 can be perpendicular to the second groove segment 5322, or they may be not perpendicular to the second groove segment 5322.

The connection position between the second groove segment 5322 and the first groove segment 5321 can be located at one end of the first groove segment 5321, or at a position deviating from the end of the first groove segment 5321. For example, the connection position between the second groove segment 5322 and the first groove segment 5321 is located at the midpoint position of the first groove segment 5321 in the extension direction. The connection position between the second groove segment 5322 and the third groove segment 5323 can be located at one end of the third groove segment 5323, or at a position deviating from the end of the third groove segment 5323. For example, the connection position between the second groove segment 5322 and the third groove segment 5323 is located at the midpoint position of the extension direction of the third groove segment 5323.

It should be noted that in the embodiment where the groove part 53 includes a multi-stage notching groove 532, it can be understood that in the adjacent two stages of notching grooves 532, the first groove segment 5321 of the first stage notching groove 532 far from the first surface 54 is set on the bottom surface of the first groove segment 5321 of the first stage notching groove 532 near the first surface 54. The second groove segment 5322 of the first stage notching groove 532 far away from the first surface 54 is located on the bottom surface of the second groove segment 5322 of the first stage notching groove 532 near the first surface 54. The third groove segment 5323 of the first stage notching groove 532 far away from the first surface 54 is located on the bottom surface of the third groove segment 5323 of the first stage notching groove 532 near the first surface 54.

In this embodiment, the pressure relief area 56 can be opened with the first groove segment 5321, second groove segment 5322, and third groove segment 5323 as boundaries. When the battery cell 10 releases pressure, the pressure relief area 56 is easier to open, achieving large-scale pressure relief of the shell component 5.

In some embodiments, continuing to refer to FIGS. 9, 15, 22, and 28, the first groove segment 5321, the second groove segment 5322, and the third groove segment 5323 define two pressure relief areas 56, which are located on both sides of the second groove segment 5322.

As an example, the first groove segment 5321, the second groove segment 5322, and the third groove segment 5323 form an H-shaped notching groove 532. The connection position between the second groove segment 5322 and the first groove segment 5321 is located at the midpoint position of the first groove segment 5321, and the connection position between the third groove segment 5323 and the second groove segment 5322 is located at the midpoint position of the third groove segment 5323. Two pressure relief areas 56 are symmetrically arranged on both sides of the second groove segment 5322.

Two pressure relief areas 56 are located on both sides of the second groove segment 5322, so that the two pressure relief areas 56 are separated by the second groove segment 5322. After the shell component 5 ruptures at the position of the second groove segment 5322, the two pressure relief areas 56 can be opened in an opposite manner along the first groove segment 5321 and the third groove segment 5323 to achieve pressure relief, which can effectively improve the pressure relief efficiency of the shell component 5.

In some other embodiments, the first groove segment 5321, the second groove segment 5322, and the third groove segment 5323 are sequentially connected, with the first groove segment 5321, the second groove segment 5322, and the third groove segment 5323 defining a pressure relief area 56.

The first groove segment 5321, the second groove segment 5322, and the third groove segment 5323 are sequentially connected to form a U-shaped notching groove 532.

In some embodiments, the notching groove 532 is a groove that extends along a non-closed trajectory.

Non-closed trajectories refer to trajectories that are not connected at both ends in the direction of extension. Non-closed trajectories can be curved trajectories, U-shaped trajectories, etc.

In this embodiment, the notching groove 532 is a groove along a non-closed trajectory, and the pressure relief area 56 can be opened by flipping. After opening, the pressure relief area 56 is ultimately connected to other areas of the shell component 5, reducing the risk of splashing after opening the pressure relief area 56.

In some embodiments, referring to FIGS. 11, 17, 24 and 30, the notching groove 532 is an arc-shaped groove.

The arc-shaped groove is a groove that extends along an arc-shaped trajectory, and the arc-shaped trajectory is a non-closed trajectory. The center angle of the arc-shaped groove can be less than, equal to, or greater than 180°.

The arc-shaped groove is simple in structure and easy to form. During the pressure relief process, the pressure relief area 56 can quickly rupture along the arc-shaped groove, allowing the pressure relief area 56 to open quickly.

In some embodiments, referring to FIGS. 13, 19, 26 and 32, the notching groove 532 is a groove that extends along a closed trajectory.

Closed trajectories refer to trajectories that are connected at both ends, and can be circular trajectories, rectangular trajectories, etc.

During the pressure relief process, the shell component 5 can rupture along the notching groove 532, allowing the pressure relief area 56 to open in a detached manner, increasing the pressure relief area of the shell component 5 and improving the pressure relief rate of the shell component 5.

In some embodiments, the notching groove 532 is an annular groove.

The annular grooves can be rectangular or circular.

The annular groove has a simple structure and is easy to form. During the pressure relief process, the shell component 5 can quickly rupture along the annular groove to quickly open the pressure relief area 56.

In some embodiments, the area of the pressure relief area 56 is D, which satisfies: 90mm²≤D≤1500mm².

In FIGS. 9, 11, 13, 15, 17, 19, 22, 24, 26, 28, 30, 32, and 34, the shaded area is the area of the pressure relief area 56.

It should be noted that in the embodiment of the groove part 53 including the multi-stage notching groove 532, the area of the pressure relief area 56 is the area of the region limited by the first stage notching groove 532 at the deepest position (innermost).

D can be a point value of any one of 90 mm², 95 mm², 100 mm², 150 mm², 200 mm², 250 mm², 300 mm², 350 mm^{2,} 400 mm², 450 mm², 500 mm², 550 mm^{2,} 600 mm², 650 mm², 700 mm², 750 mm², 800 mm², 900 mm², 950 mm², 1000 mm², 1050 mm², 1100 mm², 1150 mm², 1200 mm², 1250 mm², 1300 mm², 1350 mm², 1400 mm², 1450 mm², 1500 mm², or a range value between any two therein.

If D<90mm², the pressure relief area of the shell component 5 is small, resulting in poor timely pressure relief when the battery cell 10 loses thermal control; and if D>1500mm², the impact resistance of the pressure relief area 56 is poor, and the deformation of the pressure relief area 56 increases after being subjected to force. The weak area 52 is easily damaged under normal usage conditions of the battery cell 10, which affects the service life of the battery cell 10. Therefore, 90mm²≤D≤1500mm² can not only improve the service life of battery cells 10, but also enhance their safety.

Further, 150mm²≤D≤1200mm². This makes the comprehensive performance of shell component 5 better, while making shell component 5 have a larger pressure relief area and good impact resistance.

Further, 200mm²≤D≤1000mm².

Further, 250mm²≤D≤800mm².

In some embodiments, referring FIGS. 4-34, the shell component 5 has a first surface 54 and a second surface 55 oppositely arranged, the groove part 53 is concave from the first surface 54 towards the direction close to the second surface 55, the groove part 53 forms an outer edge 534 on the first surface 54, and the area beyond the preset distance from the outer edge 534 of the shell component 5 is the non-weak area 51. The preset distance is L.

L can be 1mm, 2mm, 3mm, 4mm, 5mm, 6mm, 7mm, 8mm, 9mm, 10mm, etc.

In the embodiments shown in FIGS. 9 to 14, the groove part 53 only includes a first stage notching groove 532, which is set on the first surface 54. The groove side of the notching groove 532 intersects with the first surface 54 to form an outer edge 534, and the groove side of the notching groove 532 surrounds the groove bottom surface of the notching groove 532. It should be noted that in the embodiment shown in FIG. 13, as the notching groove 532 extends along a closed trajectory, the groove side of the notching groove 532 intersects with the first surface 54 to form an inner ring line and an outer ring line located outside the inner ring line, with the outer ring line being the outer edge 534.

In the embodiments shown in FIGS. 15 to 20, the groove part 53 only includes a multi-stage notching groove 532. The outermost first stage notching groove 532a is set on the first surface 54, and the groove side of the outermost first stage notching groove 532a intersects with the first surface 54 to form an outer edge 534. It should be noted that in the embodiment shown in FIG. 19, as the notching groove 532 extends along a closed trajectory, the outermost first stage notching groove 532a intersects with the first surface 54 to form an inner ring line and an outer ring line located outside the inner ring line, with the outer ring line being the outer edge 534.

In the embodiments shown in FIGS. 21-27, the groove part 53 further includes a first stage sink groove 533, which is set on the first surface 54. The groove side of the sink groove 533 intersects with the first surface 54 to form an outer edge 534, and the groove side of the sink groove 533 surrounds the groove bottom surface of the sink groove 533. In the embodiments shown in FIGS. 28 to 33, the groove part 53 further includes a multi-stage sink groove 533, the outermost first stage sink groove 533a is set at the first surface 54, and the groove side of the outermost first stage sink groove 533a intersects with the first surface 54 to form an outer edge 534.

It can be understood that the distance between the outer edge 534 and the inner edge 511 of the non-weak area 51 is the preset distance L. The shape of the inner edge 511 of the non-weak area 51 can be basically the same as the shape of the outer edge 534. The direction of the preset distance L can be perpendicular to the thickness direction of the non-weak area 51, which means that the preset distance L can be measured along a direction perpendicular to the thickness direction of the non-weak area 51. When measuring the average grain size of non-weak area 51, measurements can be made in an area outside the outer edge 534.

In this embodiment, the area beyond the preset distance from the outer edge 534 of the shell component 5 is the non-weak area 51. The non-weak area 51 is at a certain distance from the groove part 53, and is not easily affected by the forming process of the groove part 53, making the grains in the non-weak area 51 more uniform.

In some embodiments, L=5mm.

It should be noted that, as shown in FIGS. 9 and 15, in the embodiment where the first groove segment 5321 of the notching groove 532 is set opposite to the third groove segment 5323, taking the first groove segment 5321 and the third groove segment 5323 in parallel as an example, when the distance between the first groove segment 5321 and the third groove segment 5323 is greater than 2*L, the inner edge 511 of the non-weak area 51 is locally located in the pressure relief area 56, so that the pressure relief area 56 is partially located in the non-weak area 51. In other embodiments, referring to FIG. 35, FIG. 35 is a structural schematic view of the shell component 5 provided in some other embodiments of the present disclosure. When the distance between the first groove segment 5321 and the third groove segment 5323 is less than or equal to 2*L, the inner edge 511 of the non-weak area 51 is not located in the pressure relief area 56, and the inner edge 511 of the non-weak area 51 is roughly rectangular. Along the width direction of the first groove segment 5321, the distance between the first groove segment 5321 and the inner edge 511 of the non-weak area 51 is L. Along the length direction of the first groove segment 5321, the distance between the first groove segment 5321 and the inner edge 511 of the non-weak area 51 is L. Along the width direction of the third groove segment 5323, the distance between the third groove segment 5323 and the inner edge 511 of the non-weak area 51 is L. Along the length direction of the third groove segment 5323, the distance between the third groove segment 5323 and the inner edge 511 of the non-weak area 51 is L.

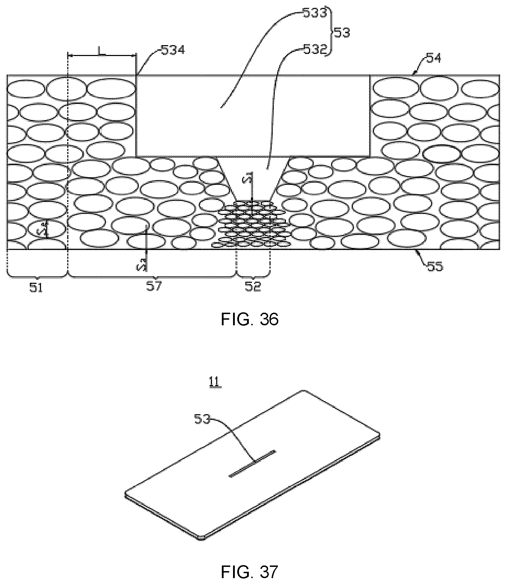

In some embodiments, referring to FIG. 36, FIG. 36 is a grain view (schematic diagram) of the shell component 5 provided in some other embodiments of the present disclosure. The shell component 5 also includes a transition area 57, which connects the weak area 52 and the non-weak area 51, wherein the average grain size of the transition area 57 is S₃, satisfying S₃≤S₂.

As an example, S₃>S₁.

The transition area 57 is the part of the shell component 5 that connects the weak area 52 and the non-weak area 51. The transition area 57 surrounds the outer side of the weak area 52, and the non-weak area 51 surrounds the outer side of the transition area 57. The weak area 52, transition area 57, and non-weak area 51 are formed integrally.

The average grain size of transition area 57 can gradually decrease from non-weak area 51 to weak area 52. As an example, as shown in FIG. 36, taking the groove part 53 including a first stage sink groove 533 and a first stage notching groove 532 as an example, the average grain size of the transition area 57 located in the outer area of the sink groove 533 can be greater than the average grain size of the transition area 57 located in the bottom area of the sink groove 533, and the average grain size of the transition area 57 located in the outer area of the sink groove 533 can be less than or equal to the average grain size S₂ of the non-weak area 51. The average grain size of the transition area 57 located at the bottom area of the sink groove 533 can be larger than the average grain size S₁ of the weak area 52.

In this embodiment, the transition area 57 serves to connect weak area 52 and non-weak area 51, achieving the integral forming of weak area 52 and non-weak area 51.

In some embodiments, referring to FIG. 37, FIG. 37 is a structural schematic view of the end cover 11 provided in some embodiments of the present disclosure. The shell component 5 is an end cover 11, which is used to close the opening of the casing 12, and the casing 12 is used to accommodate the electrode assembly 2.

Understandably, the end cover 11 is equipped with a groove part 53 to correspondingly form a weak area 52 and a non-weak area 51. The first surface 54 and the second surface 55 of the shell component 5 are the two opposite surfaces of the end cover 11 in the thickness direction, namely, one of the first surfaces 54 and the second surface 55 is the inner surface of the end cover 11 in the thickness direction, and the other one is the outer surface of the end cover 11 in the thickness direction.

The end cover 11 can be in a circular or rectangular plate-shaped structure.

As an example, in the embodiment shown in FIG. 37, the end cover 11 is of a rectangular plate-shaped structure.

In this embodiment, the end cover 11 has a pressure relief function to ensure the safety of the battery cell 10.

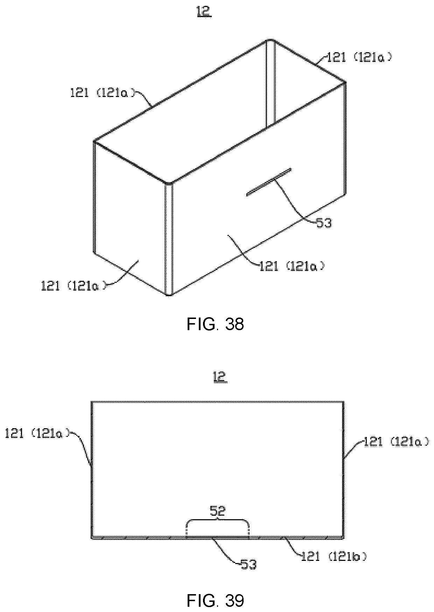

In some embodiments, referring to FIGS. 38 and 39, FIG. 38 is a structural schematic view of the casing 12 provided in some embodiments of the present disclosure; and FIG. 39 is a schematic view of a structure of the casing 12 provided in some other embodiments of the present disclosure. The shell component 5 is a casing 12, the casing 12 has an opening, and the casing 12 is used to accommodate the electrode assembly 2.

In this embodiment, the casing 12 of the shell 1 is a shell component 5, and the end cover 11 of the shell 1 is used to close the opening of the casing 12. The casing 12 can be of a hollow structure with one end forming an opening, and the casing 12 can also be of a hollow structure with two opposite ends forming openings. The casing 12 can be of cuboid, cylinder etc.

In this embodiment, the shell component 5 is the casing 12, which has a pressure relief function to ensure the safety of the battery cell 10.

In some embodiments, the casing 12 comprises multiple integrally formed wall portions 121, which collectively define the internal space of the casing 12, and at least one wall portion 121 is provided with a groove part 53.

In the casing 12, a groove part 53 can be set on one wall portion 121 to form a weak area 52 and a non-weak area 51 that are integrally formed on the wall portion 121. It is also possible to set groove parts 53 on multiple wall portions 121 to form a weak area 52 and a non-weak area 51 that are integrally formed on each wall portion 121 where groove part 53 is set. For the wall portion 121 with a groove part 53, the first surface 54 and second surface 55 of the shell component 5 are the two opposite surfaces of the wall portion 121 in the thickness direction, namely, one of the first surface 54 and the second surface 55 is the inner surface of the wall portion 121 in the thickness direction, and the other is the outer surface of the wall portion 121 in the thickness direction.

In this embodiment, multiple wall portions 121 are formed integrally, making the wall portions 121 with groove part 53 more reliable.

In some embodiments, continuing to refer to FIGS. 38 and 39, multiple wall portions 121 include a bottom wall 121b and multiple side walls 121a surrounding the bottom wall 121b, and the casing 12 forms an opening at one end opposite to the bottom wall 121b. The bottom wall 121b is equipped with a groove part 53; and/or, at least one side wall 121a is provided with a groove part 53.

In this embodiment, the casing 12 is in a hollow structure with an opening formed at one end. The side walls 121a in casing 12 can be provided in a number of three, four, five, six, or more. One, two, three, four, five, six, or more side walls 121a can be provided with the groove part 53.

As an example, in FIG. 38, only one side wall 121a is provided with a groove part 53 to correspondingly form a weak area 52 and a non-weak area 51 on that side wall 121a. In FIG. 39, only the bottom wall 121b is provided with a groove part 53 to correspondingly form a weak area 52 and a non-weak area 51 on the bottom wall 121b.

In some embodiments, continuing to refer to FIGS. 38 and 39, the shell 12 is of a cuboid.

Understandably, there are four side walls 121a in casing 12.

The cuboid casing is suitable for square battery cells and able to meet the high capacity requirements of battery cells 10.

In some embodiments, the material of the shell component 5 includes aluminum alloy.

The shell component 5 of aluminum alloy is lightweight, has good ductility, has good plastic deformation ability, and is easy to shape.

In embodiments where 0.2 ≤ A/B ≤ 0.5, due to the excellent ductility of aluminum alloy, it is easier to control A/B below 0.5 (including 0.5) when forming groove part 53 on shell component 5 through stamping, resulting in a higher molding yield.

In some embodiments, the aluminum alloy includes components with a mass percentage content of aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other individual elements ≤ 0.03%. This kind of aluminum alloy has lower hardness, and better forming ability, which reduces the difficulty of forming the groove part 53, improves the forming accuracy of the groove part 53, and improves the pressure relief consistency of the shell component 5.

In some embodiments, the aluminum alloy includes components with a mass percentage content of aluminum ≥ 96.7%, 0.05% ≤ copper ≤ 0.2%, iron ≤ 0.7%, manganese ≤ 1.5%, silicon ≤ 0.6%, zinc ≤ 0.1%, other individual element components ≤ 0.05%, and total other element components ≤ 0.15%. The shell component 5 made of this aluminum alloy has higher hardness, greater strength, and good resistance to damage.

The embodiment of the present disclosure provides a battery cell 10, which includes a shell component 5 provided by any one of the above embodiments.

In some embodiments, the battery cell 10 further comprises a casing 12 with an opening for accommodating the electrode assembly 2. The shell component 5 is an end cover 11, which closes the opening.

In some embodiments, the shell component 5 is a casing 12, the casing 12 has an opening, and the casing 12 is used to accommodate the electrode assembly 2. The battery cell 10 also includes an end cover 11, which closes the opening.

The embodiment of the present disclosure provides a battery 100, which includes a battery cell 10 provided by any one of the above embodiments.

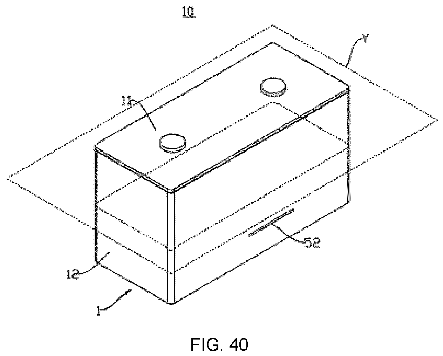

In some embodiments, referring to FIG. 40, FIG. 40 is a schematic view of a structure of the battery cell 10 provided in some embodiments of the present disclosure, wherein the weak area 52 is located at the lower part of the battery cell 10.

In the battery cell 10, the part of the battery cell 10 located below the middle plane Y of the shell 1 along the height direction of the shell 1 of the battery cell 10 is the lower part of the battery cell 10. The middle plane Y is perpendicular to the height direction of the shell 1, and the distance between the middle plane Y and the two end surfaces of the shell 1 in the height direction is equal. For example, the shell 1 includes the casing 12 and the end cover 11, which closes the opening of the casing 12. The casing 12 and end cover 11 are arranged along the height direction of shell 1. Along the height direction of shell 1, the middle plane Y is located in the middle position between the outer surface of end cover 11 away from casing 12 and the outer surface of casing 12 away from end cover 11.

The weak area 52 is located at the lower part of battery cell 10, and the groove part 53 is located at the lower part of battery cell 10. The weak area 52 and groove part 53 are both located below the middle plane Y. weak area 52 can be located in casing 12, and weak area 52 can also be located in end cover 11. The weak area 52 can be located on the side wall 121a of casing 12 or on the bottom wall 121b of casing 12. As shown in FIG. 40, taking the weak area 52 located on the side wall 121a of the casing 12 as an example, it can be that the bottom wall 121b of the casing 12 is located below the end cover 11, and the weak area 52 is located below the middle plane Y, so that the distance between the weak area 52 and the bottom wall 121b of the casing 12 is smaller than the distance between the weak area 52 and the end cover 11.

Due to the weak area 52 being located at the lower part of battery cell 10, during the use of the battery 100, under the gravity of the electrode assembly 2, electrolyte, etc. inside the battery cell 10, the weak area 52 will be subjected to a significant force. Due to the integrated structure of the weak area 52 and the non-weak area 51, it has good structural strength, and better reliability, and improves the service life of the battery cell 10.

In some embodiments, the battery cell 10 includes a casing 12 for accommodating the electrode assembly 2. The casing 12 includes integrally formed bottom wall 121b and multiple side walls 121a surrounding the bottom wall 121b. The bottom wall 121b is integrally formed with the side wall 121a, and the casing 12 forms an opening at one end opposite to the bottom wall 121b, with a weak area 52 located on the bottom wall 121b.

Understandably, the bottom wall 121b is located below the middle plane Y.

In this embodiment, the weak area 52 is located on the bottom wall 121b, with the weak area 52 facing downwards. When the battery cell 10 loses thermal control, the weak area 52 is destroyed, and the emissions from the battery cell 10 will spray downwards, reducing the risk of safety accidents. For example, in vehicle 1000, battery 100 is generally installed below the passenger cabin, with weak area 52 facing downwards, causing the emissions discharged due to the thermal runaway of battery cell 10 are ejected in the direction away from the passenger cabin, reducing the impact of emissions on the passenger cabin and the risk of safety accidents.

In some embodiments, the battery cell 10 includes an end cover 11, which is used to close the opening of the casing 12, the casing 12 is used to accommodate the electrode assembly 2, and the weak area 52 is located in the end cover 11.

Understandably, the end cover 11 is located below the middle plane Y.

In this embodiment, the weak area 52 is located on the end cover 11, so that the weak area 52 is set downwards. When the battery cell 10 loses thermal control, the weak area 52 is damaged, and the emissions in the battery cell 10 will spray downwards, reducing the risk of safety accidents.

The embodiment of the present disclosure provides an electrical equipment, including a battery 100 provided by any one of the above embodiments.

In some embodiments, the present disclosure provides an end cover 11 for battery cell 10, wherein the end cover 11 includes a non-weak area 51 and a weak area 52 integrally formed. The end cover 11 is equipped with a groove part 53, and the non-weak area 51 is formed around the groove part 53. The weak area 52 is formed at the bottom of the groove part 53, and is configured to be damaged when the internal pressure of the battery cell 10 is released. The end cover 11 has a first surface 54 that is away from the interior of the battery cell 10, and the groove part 53 forms an outer edge 534 on the first surface 54. The area beyond the preset distance of the end cover 11 from the outer edge 534 is the non-weak area 51, with a preset distance of L and L=5mm. The minimum thickness of weak area 52 is A, and the minimum thickness of non-weak area 51 is B. The average grain size of weak area 52 is S₁, the average grain size of non-weak area 51 is S₂, the hardness of weak area 52 is H₁, and the hardness of non-weak area 51 is H₂. The following conditions are met: 0.2 ≤ A/B ≤ 0.5, 0.1 ≤ S₁/S₂ ≤ 0.5, 5 ≤ A/S₁ ≤ 20, 190HBW/mm ≤ H₁/A ≤ 4000HBW/mm, and 1<H₁/H₂≤2.5.

In some embodiments, the embodiment of the present disclosure provides a casing 12 for a battery cell 10, comprising a non-weak area 51 and a weak area 52 integrally formed. The casing 12 is equipped with a groove part 53, and the non-weak area 51 is formed around the groove part 53. The weak area 52 is formed at the bottom of the groove part 53, and is configured to be destroyed when the internal pressure of the battery cell 10 is released. The casing 12 has a first surface 54 that is away from the interior of the battery cell 10, and the groove part 53 forms an outer edge 534 on the first surface 54. The area beyond the preset distance of the casing 12 from the outer edge 534 is the non-weak area 51, with a preset distance of L and L=5mm. The average grain size of weak area 52 is S₁, the average grain size of non-weak area 51 is S₂, the minimum thickness of weak area 52 is A, the minimum thickness of non-weak area 51 is B, the hardness of weak area 52 is H₁, and the hardness of non-weak area 51 is H₂, satisfying the following conditions: 0.2 ≤ A/B ≤ 0.5, 0.1 ≤ S₁/S₂ ≤ 0.5, 5 ≤ A/S₁ ≤ 20, 190HBW/mm ≤ H₁/A ≤ 4000HBW/mm, 1< H₁/H₂≤2.5.

The following provides a further detailed description of the features and performance of the present disclosure in conjunction with embodiments.

In various embodiments and comparative examples, the battery cell 10 is a square battery cell, and the end cover 11 in the battery cell 10 serves as the shell component 5. The capacity of the battery cell 10 is 150Ah, and the chemical system is NCM.

### 1. Testing Method

### (1) Minimum thickness testing for weak area 52 and non-weak area 51

The shell component 5 was cut into three segments, and the middle segment was taken as the sample. The sections at both ends of the sample had weak areas 52 and non-weak areas 51. The cutting direction was perpendicular to the length direction of the weak area 52. After polishing the section of the middle segment thoroughly to remove burrs, the sample was placed on a three-dimensional coordinate measuring instrument and the thickness of the weak area 52 and non-weak area 51 on the section was measured.

### (2) Average grain size testing for weak area 52 and non-weak area 51

The average grain size of weak area 52 and non-weak area 51 was tested using electron backscatter diffraction (EBSD) method. Shell component 5 was cut into segments, with weak areas 52 and non-weak areas 51 on sections of both ends of the middle segment. The cutting direction was perpendicular to the length direction of the weak area 52, and the cutting equipment does not change the grain structure. The middle segment was selected for sampling, and then the sample was subjected to electrolytic polishing. Then, the sample was fixed on a sample table tilted at 70°. The appropriate magnification was selected, and a scanning electron microscope (SEM) equipped with electron backscatter diffraction (EBSD) accessories was used for EBSD scanning. Based on the scanning results, the average grain size (i.e., the equal-area circle diameter of the intact grains in the inspection plane) was calculated finally.

### (3) Hardness testing for weak area 52 and non-weak area 51.

The shell component 5 was cut into three segments, and the middle segment was taken as the sample. The sections at both ends of the sample had weak areas 52 and non-weak areas 51. The cutting direction was perpendicular to the length direction of the weak area 52. After polishing the tested section thoroughly to remove burrs, the sample was placed horizontally (in which the section direction of the sample was parallel to the extrusion direction of the hardness tester) and hardness measurement was carried out on the Brinell hardness tester. If the width dimension of the weak area 52 was less than 1mm or the pressure head size of the Brinell hardness tester is much larger than the width of the weak area 52, the non-standard pressure head should be processed for hardness measurement according to the principle of Brinell hardness measurement and conversion.

### (4) The cracking rate of weak area 52 under normal usage conditions of battery cell 10

Battery cell 10 was placed under the condition of 25±2°C for cyclic charging and discharging, with a charging and discharging range of 5%-97% SOC. At the same time, the internal generated-gas pressure of battery cell 10 was monitored, and 500 sets of tests were conducted. The cut-off condition for the test was that the lifespan of battery cell 10 decreased to 80% SOH or weak area 52 was cracked during cycling in any group of battery cells 10. The criterion for determining the cracking of weak area 52 was that the internal air pressure value of battery cell 10 decreased, and the decreased value was greater than 10% of the maximum air pressure. The cracking rate of weak area 52 was calculated, with cracking rate=number with crack/total number* 100%.

### (5) The explosion rate of battery cell 10 during thermal runaway

A small heating film was arranged inside the battery cell 10, which was energized to heat the battery cell 10 until it experienced thermal runaway. Whether the battery cell 10 exploded was observed. 500 sets of experiments were repeated and the explosion rate of battery cell 10 was calculated. The explosion rate was equal to the number with explosion/total number * 100%.

### 2. Test Result

In various embodiments and comparative examples, the test results of the minimum thickness A of weak area 52, the minimum thickness B of non-weak area 51, the average grain size S₁ of weak area 52, the average grain size S₂ of non-weak area 51, the hardness H₁ of weak area 52, and the hardness H₂ of non-weak area 51 are shown in Table 1. In Table 1, the units of A and B are mm, S₁ and S₂ are in mm, and H₁ and H₂ are in HBW. The cracking rate Q₁ of weak area 52 under normal usage conditions of battery cell 10 and the explosion rate Q₂ of battery cell 10 under thermal runaway are shown in Table 2.

**Table 1**

| | A | B | A/B | S₁ | S₂ | S₁/ S₂ | A/S₁ | H₁ | H₁/A | H₂ | H₁/H₂ |
|---|---|---|---|---|---|---|---|---|---|---|---|
| Example 1 | 1.9 | 2 | 0.95 | 0.025 | 0.05 | 0.5 | 76 | 60 | 31.579 | 40 | 1.5 |
| Example 2 | 1.6 | 2 | 0.8 | 0.025 | 0.05 | 0.5 | 64 | 60 | 37.5 | 40 | 1.5 |
| Example 3 | 1.4 | 2 | 0.7 | 0.025 | 0.05 | 0.5 | 56 | 60 | 42.857 | 40 | 1.5 |
| Example 4 | 1 | 2 | 0.5 | 0.025 | 0.05 | 0.5 | 40 | 60 | 60 | 40 | 1.5 |
| Example 5 | 0.6 | 2 | 0.3 | 0.025 | 0.05 | 0.5 | 24 | 60 | 100 | 40 | 1.5 |
| Example 6 | 0.4 | 2 | 0.2 | 0.025 | 0.05 | 0.5 | 16 | 60 | 150 | 40 | 1.5 |
| Example 7 | 0.24 | 2 | 0.12 | 0.025 | 0.05 | 0.5 | 9.6 | 60 | 250 | 40 | 1.5 |
| Example 8 | 0.1 | 2 | 0.05 | 0.025 | 0.05 | 0.5 | 4 | 60 | 600 | 40 | 1.5 |
| Example 9 | 0.4 | 2 | 0.2 | 0.0475 | 0.05 | 0.9 5 | 8.42 1 | 60 | 150 | 40 | 1.5 |
| Example 10 | 0.4 | 2 | 0.2 | 0.045 | 0.05 | 0.9 | 8.88 9 | 60 | 150 | 40 | 1.5 |
| Example 11 | 0.4 | 2 | 0.2 | 0.035 | 0.05 | 0.7 | 11.4 29 | 60 | 150 | 40 | 1.5 |
| Example 12 | 0.4 | 2 | 0.2 | 0.025 | 0.05 | 0.5 | 16 | 60 | 150 | 40 | 1.5 |
| Example 13 | 0.4 | 2 | 0.2 | 0.005 | 0.05 | 0.1 | 80 | 60 | 150 | 40 | 1.5 |
| Example 14 | 0.4 | 2 | 0.2 | 0.0025 | 0.05 | 0.0 5 | 160 | 60 | 150 | 40 | 1.5 |
| Example 15 | 0.4 | 2 | 0.2 | 0.002 | 0.05 | 0.0 4 | 200 | 60 | 150 | 40 | 1.5 |
| Example 16 | 0.4 | 2 | 0.2 | 0.0033 | 0.006 6 | 0.5 | 120 | 60 | 150 | 40 | 1.5 |
| Example 17 | 0.4 | 2 | 0.2 | 0.004 | 0.008 | 0.5 | 100 | 60 | 150 | 40 | 1.5 |
| Example 18 | 0.4 | 2 | 0.2 | 0.0067 | 0.013 3 | 0.5 | 60 | 60 | 150 | 40 | 1.5 |
| Example 19 | 0.4 | 2 | 0.2 | 0.02 | 0.04 | 0.5 | 20 | 60 | 150 | 40 | 1.5 |
| Example 20 | 0.4 | 2 | 0.2 | 0.08 | 0.16 | 0.5 | 5 | 60 | 150 | 40 | 1.5 |
| Example 21 | 0.4 | 2 | 0.2 | 0.4 | 0.8 | 0.5 | 1 | 60 | 150 | 40 | 1.5 |
| Example 22 | 0.016 | 0.08 | 0.2 | 0.016 | 0.032 | 0.5 | 1 | 200 | 12500 | 133 .3 | 1.5 |
| Example 23 | 0.02 | 0.1 | 0.2 | 0.016 | 0.032 | 0.5 | 1.25 | 200 | 10000 | 133 .3 | 1.5 |
| Example 24 | 0.05 | 0.25 | 0.2 | 0.016 | 0.032 | 0.5 | 3.12 5 | 200 | 4000 | 133 .3 | 1.5 |
| Example 25 | 0.12 | 0.6 | 0.2 | 0.016 | 0.032 | 0.5 | 7.5 | 22. 8 | 190 | 15. 2 | 1.5 |
| Example 27 | 1.2 | 6 | 0.2 | 0.016 | 0.032 | 0.5 | 75 | 6 | 5 | 4 | 1.5 |
| Example 28 | 1.2 | 6 | 0.2 | 0.016 | 0.032 | 0.5 | 75 | 4.8 | 4 | 3.2 | 1.5 |
| Example 29 | 0.4 | 2 | 0.2 | 0.025 | 0.05 | 0.5 | 16 | 240 | 600 | 40 | 6 |
| Example 30 | 0.4 | 2 | 0.2 | 0.025 | 0.05 | 0.5 | 16 | 200 | 500 | 40 | 5 |
| Example 31 | 0.4 | 2 | 0.2 | 0.025 | 0.05 | 0.5 | 16 | 100 | 250 | 40 | 2.5 |
| Example 32 | 0.4 | 2 | 0.2 | 0.025 | 0.05 | 0.5 | 16 | 40 | 100 | 40 | 1 |
| Example 33 | 0.4 | 2 | 0.2 | 0.025 | 0.05 | 0.5 | 16 | 32 | 80 | 40 | 0.8 |
| Comparative Example 1 | 1.96 | 2 | 0.98 | 0.025 | 0.05 | 0.5 | 78.4 | 60 | 30.612 | 40 | 1.5 |
| Comparative Example 2 | 0.04 | 2 | 0.02 | 0.025 | 0.05 | 0.5 | 1.6 | 60 | 1500 | 40 | 1.5 |

**Table 2**

| | Q₁ | Q₂ |
|---|---|---|
| Example 1 | 0.8% | 9.2% |
| Example 2 | 1.2% | 8% |
| Example 3 | 2.4% | 5.4% |
| Example 4 | 2.8% | 3.4% |
| Example 5 | 3.2% | 2.6% |
| Example 6 | 3.6% | 1.6% |
| Example 7 | 5.2% | 1.2% |
| Example 8 | 8.4% | 0.8% |
| Example 9 | 10.2% | 0.6% |
| Example 10 | 9% | 1% |
| Example 11 | 6.4% | 1.4% |
| Example 12 | 3.2% | 2.4% |
| Example 13 | 1.8% | 3.8% |
| Example 14 | 0.8% | 6.2% |
| Example 15 | 0.6% | 8.4% |
| Example 16 | 0.6% | 8% |
| Example 17 | 1.4% | 4.0% |
| Example 18 | 2% | 3.4% |
| Example 19 | 3.4% | 1.8% |
| Example 20 | 4% | 1.4% |
| Example 21 | 8.2% | 1% |
| Example 22 | 9.2% | 0.8% |
| Example 23 | 6.4% | 2% |
| Example 24 | 3.2% | 3.4% |
| Example 25 | 2.2% | 4.6% |
| Example 27 | 1% | 6.8% |
| Example 28 | 0.6% | 8.0% |
| Example 29 | 1.2% | 8.2% |
| Example 30 | 1.8% | 5.4% |
| Example 31 | 2.4% | 2% |
| Example 32 | 7.2% | 1.4% |
| Example 33 | 8% | 1% |
| Comparative Example 1 | 0.6% | 15.0% |
| Comparative Example 2 | 14.8% | 0.6% |

Combining Table 1 and Table 2, it can be seen from the comparison between Examples 1-8 and the Comparative Example 1 that when A/B>0.95, the explosion rate of battery cell 10 is higher during thermal runaway, with an explosion rate greater than 12%. By comparing Examples 1-8 with Comparative Example 2, it can be seen that when A/B is less than 0.05, the cracking rate of weak area 52 is higher under normal usage conditions of battery cell 10, with a cracking rate greater than 12%. Therefore, 0.05 ≤ A/B ≤ 0.95 can not only reduce the risk of weak area 52 being broken under normal usage conditions of battery cell 10, but also timely release pressure through weak area 52 in case of thermal runaway of battery cell 10, reducing the risk of explosion of battery cell 10. From Examples 2-7, it can be seen that when 0.12 ≤ A/B ≤ 0.8, the comprehensive performance of battery cell 10 is better, and the cracking rate of weak area 52 under normal usage conditions of battery cell 10 and the explosion rate of battery cell 10 under thermal runaway are both lower. When 0.2 ≤ A/B ≤ 0.5, the effect is better.

According to Examples 10-15, it can be seen that when S₁/S₂ ≤ 0.9, the cracking rate of weak area 52 is relatively low under normal usage conditions of battery cell 10. In Example 9, when S₁/S₂>0.9, the cracking rate of weak area 52 significantly increases under normal usage conditions of battery cell 10. Comparing Examples 10-15 and 9, it can be seen that controlling S₁/S₂ to no more than 0.9 can effectively reduce the risk of weak area 52 being damaged under normal usage conditions of battery cell 10, thereby improving the service life of battery cell 10.

According to Example 15, it can be seen that when S₁/S₂ is less than 0.05, the difficulty of damage to weak area 52 in the event of thermal runaway of battery cell 10 increases, such that the pressure relief is not timely, and the risk of explosion of battery cell 10 significantly increases. Comparing Examples 9-14 and 15, it can be seen that controlling S₁/S₂ to no less than 0.5 can effectively reduce the explosion rate of battery cell 10 during thermal runaway. When 0.1≤S₁/S₂≤0.5, the cracking rate of weak area 52 under normal usage conditions of battery cell 10 and the explosion rate of battery cell 10 during thermal runaway are both lower, ensuring that weak area 52 can be timely destroyed during thermal runaway of battery cell 10 and that weak area 52 has sufficient strength under normal usage conditions of battery cell 10.

From the comparison between Examples 17-21 and Example 16, it can be seen that when 1≤A/S₁≤100, battery cell 10 can timely release pressure in case of thermal runaway, and the explosion rate of battery cell 10 is relatively low. When 5≤A/S₁≤20, the comprehensive performance of battery cell 10 is better, and the cracking rate of weak area 52 under normal usage conditions of battery cell 10 and the explosion rate of battery cell 10 during thermal runaway are both lower.

From the comparison between Examples 23-27 and Example 22, it can be seen that when H₁/A>10000 HBW/mm, the cracking rate of weak area 52 is higher under normal usage conditions of battery cell 10. Comparing Examples 23-27 and 28, it can be seen that when H₁/A<5HBW/mm, the explosion rate of battery cell 10 is higher during thermal runaway. Therefore, 5HBW/mm≤H₁/A≤10000 HBW/mm can not only reduce the risk of weak area 52 being broken under normal usage conditions of battery cell 10, but also timely release pressure through weak area 52 in case of thermal runaway of battery cell 10, reducing the risk of explosion of battery cell 10. From Examples 24-25, it can be seen that when 190HBW/mm≤H₁/A≤4000HBW/mm, the comprehensive performance of battery cell 10 is better, and the cracking rate of weak area 52 under normal usage conditions of battery cell 10 and the explosion rate of battery cell 10 during thermal runaway are both lower.

From the comparison between Examples 29-31 and Examples 32-33, it can be seen that when H₁/H₂≤1, the cracking rate of weak area 52 is higher under normal usage conditions of battery cell 10. However, H₁/H₂>1 can effectively reduce the cracking rate of weak area 52 under normal usage conditions of battery cell 10. Comparing Examples 30-31 and 29, it can be seen that when H₁/H₂ > 5, the explosion rate of battery cell 10 is higher during thermal runaway. However, H₁/H₂≤5 can reduce the risk of explosion of battery cell 10.

It should be noted that in the absence of conflicts, the embodiments and the features in the embodiments in the present disclosure can be combined with each other.

The above embodiment is only used to illustrate the technical solution of the present disclosure and is not intended to limit it. For those skilled in the art, the present disclosure may undergo various modifications and variations. Any modifications, equivalent replacements, improvements, etc. made within the spirit and principles of the present disclosure shall be included within the scope of protection of the present disclosure.

## Claims

1. A shell component, for a battery cell, comprising a non-weak area and a weak area that are integrally formed, wherein the shell component is provided with a groove part by press forming, the non-weak area is formed around the groove part, the weak area is formed at a bottom of the groove part, and the weak area is configured to be damaged when an internal pressure of the battery cell is released,
wherein a minimum thickness of the weak area is A, and a minimum thickness of the non-weak area is B, satisfying 0.05 ≤ A/B ≤ 0.95.

2. The shell component according to claim 1, wherein 0.12≤A/B≤0.8, preferably, 0.2≤A/B≤0.5.

3. The shell component according to claim 1 or 2, wherein 0.02mm≤A≤1.6mm, preferably, 0.06mm≤A≤0.4mm.

4. The shell component according to any one of claims 1-3, wherein 1mm≤B≤5mm, preferably, 1.2mm≤B≤3.5mm, preferably, 2mm≤B≤3mm.

5. The shell component according to any one of claims 1-4, wherein an average grain size of the weak area is S₁, and an average grain size of the non-weak area is S₂, satisfying S₁/S₂ ≤ 0.9.

6. The shell component according to claim 5, wherein S₁/S₂≥0.05, preferably, 0.1≤S₁/S₂≤0.5.

7. The shell component according to claim 5 or 6, wherein 0.4µm ≤ S₁ ≤ 75µm, preferably, 1µm≤S₁≤10µm.

8. The shell component according to any one of claims 5-7, wherein 10µm≤S₂≤150µm, preferably, 30µm≤S₂≤100µm.

9. The shell component according to any one of claims 1-8, wherein an average grain size of the weak area is S₁, satisfying 1≤A/S₁≤100, preferably, 5≤A/S₁≤20.

10. The shell component according to any one of claims 1-9, wherein a hardness of the weak area is H₁, satisfying 5HBW/mm≤H₁/A≤10000 HBW/mm, preferably, 190HBW/mm≤H₁/A≤4000 HBW/mm.

11. The shell component according to any one of claims 1-10, wherein a hardness of the weak area is H₁, and a hardness of the non-weak area is H₂, satisfying H₁>H₂.

12. The shell component according to claim 11, wherein H₁/H₂≤5, preferably, H₁/H₂≤2.5.

13. The shell component according to claim 11 or 12, wherein 5HBW≤H₂≤150HBW.

14. The shell component according to any one of claims 10-13, wherein 5HBW≤H₁≤200HBW.

15. The shell component according to any one of claims 1-14, wherein the shell component has a pressure relief area, wherein the groove part comprises a first stage notching groove, the notching groove is set along an edge of the pressure relief area, the pressure relief area is configured to open with the notching groove as a boundary, and the weak area forms a bottom of the notching groove.

16. The shell component according to claim 15, wherein the shell component has a first surface and a second surface that are arranged oppositely, and the notching groove is recessed from the first surface towards a direction close to the second surface.

17. The shell component according to any one of claims 1-14, wherein the shell component comprises a first surface and a second surface that are relatively arranged, and the groove part comprises multi-stage notching grooves, wherein the multi-stage notching grooves are sequentially arranged along a direction from the first surface to the second surface on the shell component; and the weak area is formed at a bottom of a first stage notching groove farthest from the first surface,
wherein the shell component has a pressure relief area, and each stage of notching groove is set along an edge of the pressure relief area; and the pressure relief area is configured to open with the first stage notching groove farthest from the first surface as a boundary.

18. The shell component according to claim 17, wherein a first stage notching groove farthest from the second surface is recessed from the first surface towards a direction close to the second surface.

19. The shell component according to claim 15 or 17, wherein the shell component comprises a first surface and a second surface that are relatively arranged, and the groove part further comprises a first stage sink groove, wherein the sink groove is recessed from the first surface towards a direction close to the second surface, and the pressure relief area is formed on a bottom wall of the sink groove.

20. The shell component according to claim 15 or 17, wherein the shell component comprises a first surface and a second surface that are relatively arranged, and the groove part further comprises multi-stage sink grooves, wherein the multi-stage sink grooves are sequentially arranged along a direction from the first surface to the second surface on the shell component; a first stage sink groove farthest from the second surface is concave from the first surface towards the second surface; and the pressure relief area is formed on a bottom wall of a first stage sink groove farthest from the first surface.

21. The shell component according to claim 19 or 20, wherein an internal space of the sink groove is of a cylinder, prismoid, circular truncated cone, or frustum.

22. The shell component according to any one of claims 15-21, wherein the notching groove comprises a first groove segment and a second groove segment, wherein the first groove segment intersects with the second groove segment, and the first groove segment and the second groove segment are set along an edge of the pressure relief area.

23. The shell component according to claim 22, wherein the notching groove further comprises a third groove segment, wherein the first groove segment and the third groove segment are set opposite to each other, the second groove segment and the third groove segment intersect, and the first groove segment, the second groove segment, and the third groove segment are set along the edge of the pressure relief area.

24. The shell component according to claim 23, wherein the first groove segment, the second groove segment, and the third groove segment are sequentially connected, with the first groove segment, the second groove segment, and the third groove segment defining the pressure relief area.

25. The shell component according to claim 23, wherein the first groove segment, the second groove segment, and the third groove segment define two pressure relief areas, wherein the two pressure relief areas are located on both sides of the second groove segment.

26. The shell component according to any one of claims 15-21, wherein the notching groove is a groove that extends along a non-closed trajectory.

27. The shell component according to any one of claims 15-21 and 26, wherein the notching groove is an arc-shaped groove.

28. The shell component according to any one of claims 15-21, wherein the notching groove is a groove that extends along a closed trajectory.

29. The shell component according to any one of claims 15-21 and 28, wherein the notching groove is an annular groove.

30. The shell component according to any one of claims 15-29, wherein an area of the pressure relief area is D, which satisfies: 90mm²≤D≤1500mm²; preferably, 150mm²≤D≤1200mm²; preferably, 200mm²≤D≤1000mm²; preferably, 250mm²≤D≤800mm².

31. The shell component according to any one of claims 1-30, wherein the shell component has a first surface and a second surface oppositely arranged, the groove part is concave from the first surface towards a direction close to the second surface, the groove part forms an outer edge on the first surface, and an area beyond a preset distance from the outer edge of the shell component is the non-weak area.

32. The shell component according to claim 31, wherein the preset distance is L, which satisfies: L=5mm.

33. The shell component according to any one of claims 1-32, wherein the shell component further comprises a transition area, wherein the transition area connects the weak area and the non-weak area, wherein an average grain size of the transition area is S₃, satisfying S₃≤S₂.

34. The shell component according to any one of claims 1-33, wherein the shell component is an end cover, wherein the end cover is configured to close an opening of a casing, and the casing is configured to accommodate an electrode assembly.

35. The shell component according to any one of claims 1-33, wherein the shell component is a casing, the casing has an opening, and the casing is configured to accommodate an electrode assembly.

36. The shell component according to claim 35, wherein the casing comprises multiple integrally formed wall portions, wherein the multiple wall portions collectively define an internal space of the casing, and at least one wall portion is provided with the groove part.

37. The shell component according to claim 36, wherein the multiple wall portions comprise a bottom wall and multiple side walls surrounding the bottom wall, and the casing forms the opening at one end opposite to the bottom wall; and
the bottom wall is provided with the groove part; and/or
at least one of the side walls is provided with the groove part.

38. The shell component according to any one of claims 35-37, wherein the casing is of cuboid.

39. The shell assembly according to any one of claims 1-38, wherein a material of the shell component comprises an aluminum alloy.

40. The shell component according to claim 39, wherein the aluminum alloy comprises components with a mass percentage content of aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other individual elements ≤ 0.03%.

41. The shell component according to claim 39, wherein the aluminum alloy comprises components with a mass percentage content of aluminum ≥ 96.7%, 0.05% ≤ copper ≤ 0.2%, iron ≤ 0.7%, manganese ≤ 1.5%, silicon ≤ 0.6%, zinc ≤ 0.1%, other individual element components ≤ 0.05%, and total other element components ≤ 0.15%.

42. A battery cell, comprising:
the shell component according to any one of claims 1-41.

43. The battery cell according to claim 42, wherein the battery cell further comprises a casing, wherein the casing has an opening for accommodating an electrode component; and
the shell component is an end cover, and the end cover closes the opening.

44. The battery cell according to claim 42, wherein the shell component is a casing, the casing has an opening, and the casing is configured to accommodate an electrode assembly; and
the battery cell further comprises an end cover, and the end cover closes the opening.

45. A battery, comprising the battery cell according to any one of claims 42 to 44.

46. The battery according to claim 45, wherein the weak area is located at a lower part of the battery cell.

47. The battery according to claim 46, wherein the battery cell comprises a casing for accommodating an electrode assembly, wherein the casing comprises a bottom wall and multiple side walls surrounding the bottom wall, the bottom wall is integrally formed with the side walls, the casing forms an opening at one end opposite to the bottom wall, and the weak area is located on the bottom wall.

48. The battery according to claim 46, wherein the battery cell comprises an end cover, the end cover is configured to close an opening of a casing, the casing is configured to accommodate an electrode assembly, and the weak area is located on the end cover.

49. An electrical equipment, comprising the battery according to any one of claims 45-48.
